# EUROPEAN PATENT SPECIFICATION

(11) **EP 2 503 428 B1**
(45) Date of publication and mention of the grant of the patent: **21.06.2017**
(21) Application number: 12160719.6
(22) Date of filing: 22.03.2012
(51) Int. Cl.: H04N 1/00, G03G 15/00, G06F 1/16

(54) **Operation panel device and image forming apparatus provided therewith**
Bedienungstafelvorrichtung und Bilderzeugungsvorrichtung damit
Dispositif de panneau de commande et appareil de formation d'images fourni avec celui-ci

(30) Priority: 22.03.2011 JP 2011062590
(43) Date of publication of application: 26.09.2012
(73) Proprietor: Konica Minolta Business Technologies, Inc., Chiyoda-ku Tokyo 100-0005 (JP)
(72) Inventor: Uchida, Satomi, Tokyo, 100-0005 (JP)
(74) Representative: Hoffmann Eitle

(56) References cited:
- EP-A2- 2 290 920
- JP-A- 2003 312 088
- JP-A- 2010 039 424
- US-A1- 2005 024 688

## Description

### BACKGROUND OF THE INVENTION

### Field of the Invention

The preset invention relates to an operation panel device and an image forming apparatus provided therewith.

### Description of the Related Art

Various operation keys such as a mode switching key and a one-touch key are provided in an operation panel device used to operate a conventional image forming apparatus. Recently, the number of such operation keys disposed in the operation panel device is increased with the increasing number of functions of the image forming apparatus, and the operation panel device tends to become larger in size. Disposition of the operation keys also tend to become complicated on an operation surface of the operation panel device.

In an image forming apparatus that has a function of discharging a recorded sheet to a space formed between a read unit and an image forming unit, the number of operation keys is increased due to the multiple functions, and an operation panel device of a large size is sometimes formed on a front surface (facing a user operating the image forming apparatus) of the image forming apparatus. In such cases, because the eyesight of the user is blocked b y the operation panel device, the user hardly checks a sheet discharged to the space from above the image forming apparatus. There are also strong demands for improvement in visibility of the operation panel device itself.

Japanese Laid-Open Patent Publication No. 2001-337501 discloses an operation panel device mounted on a facsimile apparatus or the like. The operation panel device includes an operation panel that includes a plurality of keys and is fixed to a main body, and a one-touch panel that includes a plurality of keys and is attached so as to be drawn from the main body. The one-touch panel is provided near one of side surfaces of the main body so as to be openable and closable.

In an acoustic apparatus disclosed in Japanese Laid-Open Patent Publication No. 08-072624 , a key unit of an in-vehicle operation panel is arrayed while a key region portion of a high use frequency and a key region portion of a low use frequency are separated from each other, and a movable display is slid, so that the key region portion of the high use frequency can be operated when the display is moved leftward, and the key region portion of the low use frequency can be operated when the display is moved rightward.

When the operation panel device is simply reduced in size to avoid the operation panel device of a large size, it is necessary to delete some operation key having a certain function, which inhibits the multiple functions required to the image forming apparatus.

The image forming apparatus increasingly implements the function in response to an instruction from not only the operation panel device but also a personal computer or the like as an external device. For example, the image forming apparatus outputs a recorded sheet based on a print output instruction from the personal computer. Therefore, it is not necessary that an operation key of a low use frequency be always exposed.

JP 2010 039424 A is concerned with an image forming apparatus.

### SUMMARY OF THE INVENTION

The present invention is aimed to provide an operation panel device and an image forming apparatus, with which the operation panel device is compactly configured while multiple functions of the image forming apparatus are maintained, and user's visibility of the operation panel device is improved.

An aspect of the present invention provides an operation panel device that is mounted on an image forming apparatus and includes a display surface. The operation panel device includes first and second panels that are configured to be relatively movable along a plane parallel to the display surface. The first panel is fixed to the image forming apparatus. The second panel is disposed opposite to the image forming apparatus with respect to the first panel. A projection area of the second panel to the plane parallel to the display surface is smaller than a projection area of the first panel. Each of the first and second panels includes a first group of keys disposed in a region that is exposed independent from relative positions of the first and second panels. The first panel includes a second group of keys disposed in a region that is exposed only when the first and second panels do not overlap each other.

Preferably, the first group of keys is commonly used in a plurality of processes that can be performed by the image forming apparatus, and the second group of keys is used in processes of a number smaller than that the number of processes performed with use of the first group of keys in the plurality of processes that can be performed by the image forming apparatus.

Preferably, the operation panel device further includes a display device for providing a display surface, and the display device is mounted on the second panel.

More preferably, the second group of keys of the first panel includes the keys used for inputting a numeric character.

A mechanism that can relatively move the first and second panels is configured to vary in a plurality of steps an exposure amount of a region where the second group of keys of the first panel is disposed.

Alternatively, further preferably, the first and second panels can relatively move in both a first direction and a second direction opposite to the first direction, and the first panel includes a first key of the second-key group disposed in a region that is exposed when the second panel relatively moves in the first direction, and a second key of the second-key group disposed in a region that is exposed when the second panel relatively moves in the second direction.

Alternatively, further preferably, the first and second panels can relatively move in both a first direction and a second direction opposite to the first direction, and the second group of keys of the first panel is disposed in a region that is exposed when the first panel relatively moves in the first direction and is also exposed when the first panel relatively moves in the second direction.

Preferably, the second group of keys of the first panel further includes an interrupt key that is disposed close to the keys used for inputting a numeric character.

Preferably, the second group of keys of the first panel further includes a voice guide key that is disposed close to the keys used for inputting a numeric character.

Preferably, the second group of keys of the first panel further includes the keys used for inputting a character.

Preferably, in the second panel, the display device is disposed on a side identical to a moving direction of the second panel, and the keys are disposed on a side opposite to the moving direction.

Preferably, the first panel includes a movable unit in which the second group of keys is disposed, and the movable unit moves relatively in a second direction opposite to a first direction in the first panel in response to the relative movements of the first and second panels in the first direction.

Preferably, a ridge line portion of the second panel is formed into a non-right angle shape, and the ridge line portion corresponds to the region that is exposed by the relative movements of the first and second panels.

Preferably, the operation panel device is disposed on a side opposite to a sheet discharge direction of the image forming apparatus and in a position where the operation panel device does not project from a side surface of the image forming apparatus.

A direction in which the second panel is moved to provide the exposed region is identical to the sheet discharge direction of the image forming apparatus.

The operation panel device further includes a fixing mechanism for fixing a state in which the first and second panels do not overlap each other.

More preferably, the fixing mechanism includes a stopper piercing the first and second panels from a side opposite to the display surface.

Further preferably, the fixing mechanism further includes a mechanism for forcing a rod-shaped stopper.

Another aspect of the present invention provides an image forming apparatus including the above operation panel device.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view illustrating an entire configuration of an image forming apparatus on which an operation panel device according to an embodiment of the present invention is mounted.
Fig. 2 is a perspective view illustrating a basic structure of the operation panel device according to the embodiment of the present invention.
Fig. 3 is a schematic diagram illustrating an example of a key layout of the operation panel device according to the embodiment of the present invention.
Fig. 4 is a schematic diagram illustrating a slide mode (first variation) of the operation panel device according to the embodiment of the present invention.
Fig. 5 is a schematic diagram illustrating a slide mode (second variation) of the operation panel device according to the embodiment of the present invention.
Fig. 6 is a schematic diagram illustrating a slide mode (third variation) of the operation panel device according to the embodiment of the present invention.
Fig. 7 is a schematic diagram illustrating a slide mode (fourth variation) of
   the operation panel device according to the embodiment of the present invention.
Fig. 8 is a schematic diagram illustrating a slide mode (fifth variation) of the operation panel device according to the embodiment of the present invention.
Figs. 9 to 12 are schematic diagrams each illustrating an array example of a numeric keypad of the operation panel device according to the embodiment of the present invention.
Figs. 13 to 15 are schematic diagrams each illustrating a configuration for exposing the numeric keypad of the operation panel device according to the embodiment of the present invention.
Figs. 16 and 17 are schematic diagrams each illustrating an array example of on-keyboard keys of the operation panel device according to the embodiment of the present invention.
Figs. 18 to 20 are schematic diagrams each illustrating an array example of the numeric keypad and the on-keyboard keys of the operation panel device according to the embodiment of the present invention.
Fig. 21 is a schematic diagram illustrating a configuration example for implementing relative movements of panels of the operation panel device according to the embodiment of the present invention.
Figs. 22 to 24 are views each illustrating a slide mechanism that implements the relative movements of the panels in Fig. 21.
Fig. 25 is a schematic diagram illustrating another configuration example for implementing the relative movements of the panels of the operation panel device according to the embodiment of the present invention.
Fig. 26 is a schematic diagram illustrating a configuration example for implementing the relative movements in a plurality of directions of the panels of the operation panel device according to the embodiment of the present invention.
Fig. 27 is a schematic diagram illustrating more specifically slide operations corresponding to slide movements (1) to (3) in (A) of Fig. 26.
Fig. 28 is a schematic diagram illustrating a configuration in which both the panels and a group of operation keys are relatively movable.
Fig. 29 is a schematic diagram illustrating a shape of an upper panel constituting the operation panel device according to the embodiment.
Fig. 30 is a schematic diagram illustrating a structure example for enhancing a resistance to a pressing force from a user.
Fig. 31 is a schematic diagram illustrating a structure example for strengthens a coupling force between the two panels.
Fig. 32 is a schematic diagram (first variation) illustrating a fixing structure between the panels in the operation panel device according to the embodiment of the present invention.
Fig. 33 is a schematic diagram (second variation) illustrating a fixing structure between the panels in the operation panel device according to the embodiment of the present invention.
Fig. 34 is a schematic diagram (third variation) illustrating a fixing structure between the panels in the operation panel device according to the embodiment of the present invention.
Figs. 35 and 36 are views each illustrating a desirable mounting position of the operation panel device according to the embodiment of the present invention.
Fig. 37 is a schematic diagram illustrating the operation panel device according to the embodiment of the present invention, in which a pop-up structure is adopted.

### DESCRIPTION OF THE PREFERRED EMBODIMENTS

Hereinafter, an operation panel device according to an embodiment of the present invention and an image forming apparatus provided therewith will be described with reference to the drawings. In the following embodiment, the scope of the present invention is not necessarily limited to the number of pieces and a quantity, when referred to, unless otherwise specified. The same component and the equivalent component are denoted by the same reference symbol, and overlapping description may not be repetitively provided in some cases.

It is understood that configurations of various embodiments may be properly combined.

### <A. Entire Configuration of Image Forming Apparatus>

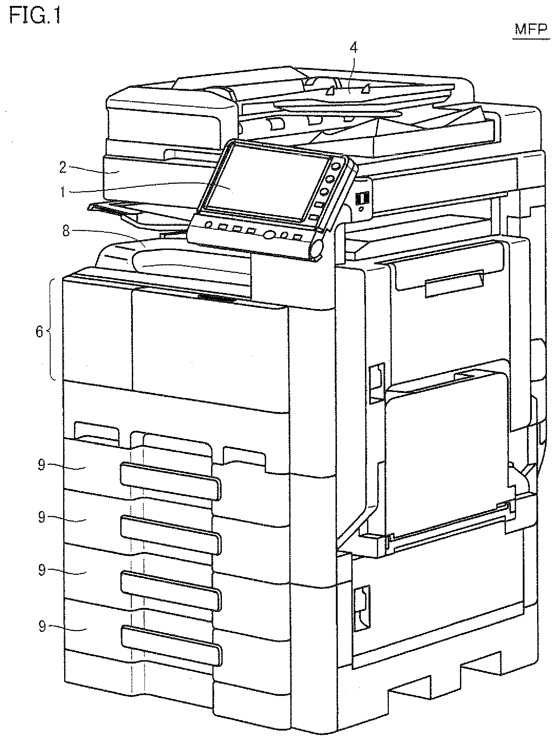

Fig. 1 is a perspective view illustrating an entire configuration of an image forming apparatus on which an operation panel device according to an embodiment of the present invention is mounted. Fig. 1 illustrates a Multi-Function Peripheral (MFP) to which a plurality of functions such as a scanner function, a copy function, a facsimile function, a network function, and a BOX function are provided as a typical example of the image forming apparatus.

The image forming apparatus MFP of the present embodiment includes a scanner 2 that optically reads an original text to acquire image data, and a print engine 6 that prints an image on a sheet based on the image data. A feeder 4 that feeds the original text to scanner 2 is disposed on a top of a main body of image forming apparatus MFP, and a plurality of sheet feeders 9 that deliver sheets to print engine 6 is disposed in a lower portion of the main body. A tray 8, to which the sheet on which the image is formed by print engine 6 is discharged, is disposed in a central portion of image forming apparatus MFP.

An operation panel device 1 having a display surface is mounted on a front surface side (a side facing a user) on the top of the main body of image forming apparatus MFP. Operation panel device 1 is used for operating image forming apparatus MFP. Operation panel device 1 includes a display device and a plurality of keys that receive, from the user, various instructions and input operations of numeric characters, characters, symbols, and the like. Desirably, a touch panel in which an input function and a display function are integrated is adopted as the display device. The display device configured by the touch panel displays a menu screen and the like to the user in order to receive various pieces of information and/or various operations in response to the user operations. The display device also acquires a position to which the touch operation is performed by the user, and acquires input information corresponding to the acquired position. A detailed structure of operation panel device 1 according to the embodiment of the present invention will be described below from various aspects with reference to the drawings.

### <B. Basic Structure of Operation Panel Device>

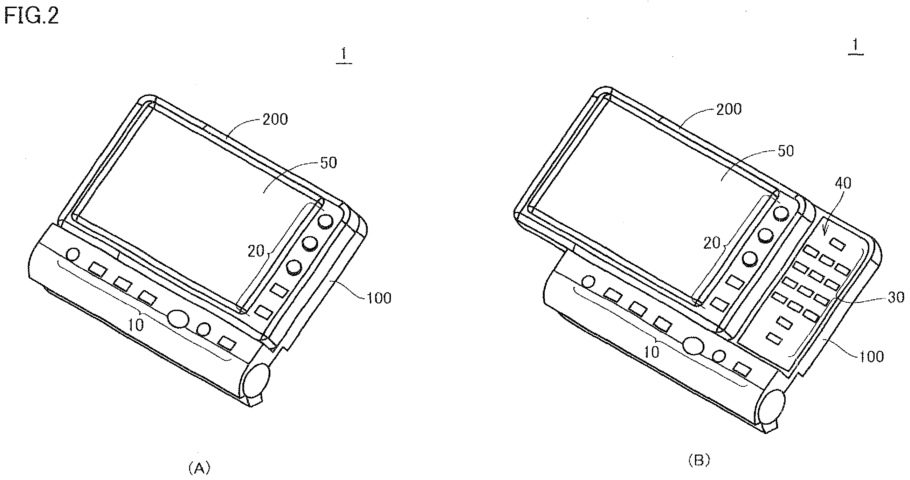

First, a basic structure of operation panel device 1 according to the present embodiment will be described. Fig. 2 is a perspective view illustrating the basic structure of operation panel device 1 according to the embodiment of the present invention.

Referring to Fig. 2, operation panel device 1 of the present embodiment includes a first panel 100 and a second panel 200, which are configured to be relatively movable along a plane parallel to the display surface. Typically, one of first panel 100 and second panel 200 is fixed to image forming apparatus MFP, as to be described later. The panel that is not fixed to image forming apparatus MFP moves (slides) relatively to the panel fixed to image forming apparatus MFP, thereby switching between a state in which projection areas of first panel 100 and second panel 200 are minimized as illustrated in (A) of Fig. 2 and a state in which the projection areas of first panel 100 and second panel 200 are larger as illustrated in (B) of Fig. 2. Sometimes the state illustrated in (A) of Fig. 2 is referred to as a "closed state", and the state illustrated in (B) of Fig. 2 is referred to as an "opened state".

Fig. 2 illustrates a configuration in which first panel 100 and second panel 200 slide along longitudinal directions of first panel 100 and second panel 200. Alternatively, first panel 100 and second panel 200 may slide along transverse directions. Still alternatively, first panel 100 and second panel 200 may slide in a plurality of axis directions.

In operation panel device 1, a display device 50 including the touch panel is mounted on a surface of the panel closer to the user, in other words, on the surface of the panel located farther away from image forming apparatus MFP. Display device 50 presents various pieces of information to the user while receiving the user operations.

In operation panel device 1, a first group of keys is disposed in a region of first panel 100 and/or second panel 200 while being exposed independent from the relative positions of first panel 100 and second panel 200. Further, in one of first panel 100 and second panel 200, a second group of keys is disposed in a region that is exposed when first panel 100 and second panel 200 do not overlap each other (that is, in the opened state).

As described above, operation panel device 1 of the present embodiment is configured by the two overlapping panels, one of the panels is fixed to image forming apparatus MFP, and the operation keys are exposed when the other panel that is not fixed moves so as to be projected from the fixed panel (when the other panel faces operation panel device 1).

In operation panel device 1 of the present embodiment, the functions of operation panel device 1 are each classified into a function allocated to a key that is disposed in an operable position even in the closed state or a function allocated to a key that is disposed in an operable position only in the opened state, whereby the operation panel device is compactly formed while the multiple functions of image forming apparatus MFP are maintained. More specifically, the first group of keys is commonly used in a plurality of processes that can be performed by image forming apparatus MFP, and the second group of keys is used in processes of the number smaller than that of the processes performed with use of the first group of keys in the plurality of processes that can be performed by the image forming apparatus. In typical examples of the first and second group of keys, a start key that is commonly used to issue an instruction to start the functions provided by image forming apparatus MFP is desirably included in the first group of keys. On the other hand, the keys used for inputting a numeric character (numeric keypad) is desirably included in the second group of keys because the keys are used only for the functions such as the copy function and the facsimile function, which require inputting a numeric character.

In the example in Fig. 2, as a typical example of the first group of keys, some operation keys (hereinafter referred to as "operation key group 10")are disposed on a surface of first panel 100 while other operation keys (hereinafter referred to as "operation key group 20") are disposed on a surface of second panel 200. The regions where operation key groups 10 and 20 are disposed are exposed in either the closed state in (A) of Fig. 2 or the opened state in (B) of Fig. 2. On the other hand, a surface region 40 of first panel 100 is exposed only in the opened state. Other operation keys (hereinafter referred to as "operation key group 30") as a typical example of the second group of keys are disposed in surface region 40.

More specifically, Fig. 2(A) illustrates the state (closed state) in which second panel 200 covers operation key group 30 of first panel 100. In the closed state, except operation key group 10 disposed on the surface of first panel 100, the whole surface of first panel 100 is covered with second panel 200. On the other hand, Fig. 2(B) illustrates the state (opened state) in which second panel 200 slides in an upper left direction in the figure. In the opened state, operation key group 30 disposed in surface region 40 is exposed in addition to operation key group 10 disposed on the surface of first panel 100. The user can substantially operate operation key group 30 only when operation panel device 1 is in the opened state.

Desirably each of operation key groups 10, 20, and 30 includes at least one key (hardware key).

### <C. Key Layout of Operation Panel Device>

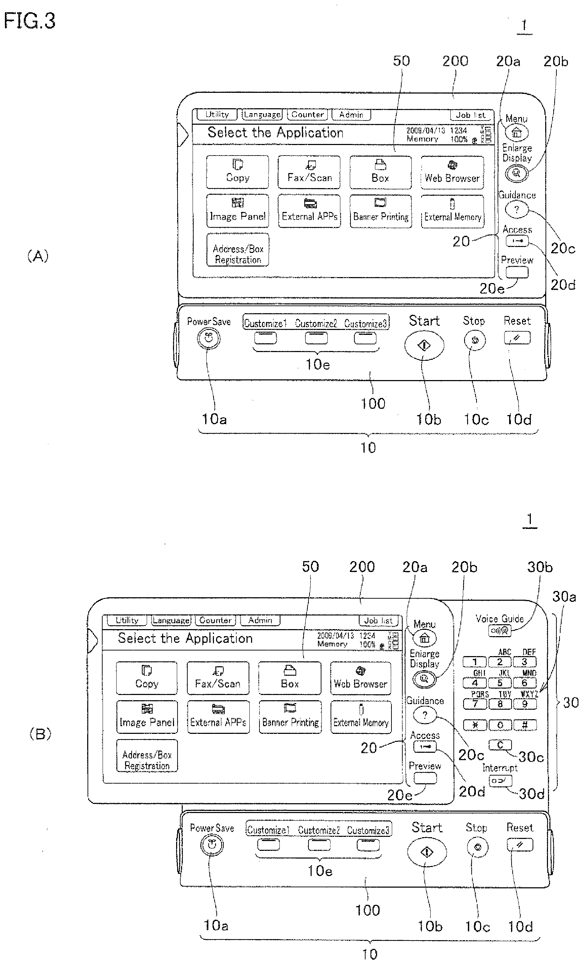

A key layout of operation panel device 1 of the present embodiment will be described below. Fig. 3 is a schematic diagram illustrating an example of the key layout of operation panel device 1 according to the embodiment of the present invention.

Referring to Fig. 3, operation key group 10 mainly includes keys that are commonly used for the plurality of functions provided by image forming apparatus MFP. More specifically, operation key group 10 includes a power save button 10a, a start button 10b, a stop button 10c, a reset button 10d, and a plurality of customize buttons 10e. Desirably, operation key group 10 is disposed in an easy-to-recognize position because the user always uses operation key group 10.

Power save button 10a receives an operation to switch image forming apparatus MFP into a lower power consumption state. Start button 10b receives an operation to start a function that is selected previously in image forming apparatus MFP. Stop button 10c receives an operation to stop the function that is currently performed in response to the operation to start button 10b. Reset button 10d receives an operation to return a state in which some sort of setting is provided by a preceding operation or the like, into an initial state. Customize button 10e is used for transitioning to an operation or a state that is previously set by the user using image forming apparatus MFP.

Operation key group 20 mainly include keys that are commonly used for managing the plurality of functions provided by image forming apparatus MFP. More specifically, operation key group 20 include a menu button 20a, an enlarge display button 20b, a guidance button 20c, an access button 20d, and a preview button 20e. Desirably, operation key group 20 is disposed in the same panel as display device 50 (typically, touch panel) because operation key group 20 is associated with the operations to display device 50.

Menu button 20a receives an operation to display a menu screen (for example, contents displayed on display device 50 in Fig. 3). Enlarge Display button 20b receives an operation to enlarge contents displayed on display device 50. Guidance button 20c receives an operation to display a guidance menu (help menu) relating to one of the various functions provided by image forming apparatus MFP and/or one of various operations. Access button 20d receives an operation to restrict users who can use image forming apparatus MFP. For example, access button 20d is used for performing an operation to put image forming apparatus MFP into a password input state when only the users who know a specific password are authorized to use image forming apparatus MFP. Preview button 20e receives an operation to check a finish state on display device 50 before an image is formed onto a sheet.

Operation key group 30 is used in the processes of the number smaller than that of the processes performed with use of the first group of keys in the plurality of processes that can be performed by image forming apparatus MFP. That is, operation key group 30 is used for operating only the specific functions provided by image forming apparatus MFP. Therefore, typically the use frequency of operation key group 30 is assumed to be lower than those of operation key groups 10 and 20.

More specifically, operation key group 30 includes a numeric keypad 30a, a voice guide key 30b, a clear key 30c, and an interrupt key 30d. Numeric keypad 30a are the keys used for inputting a numeric character, and numeric keypad 30a typically includes 10 keys of "0" to "9". Clear key 30c receives an operation to clear a value input through a preceding operation to numeric keypad 30a or the like. Interrupt key 30d receives an operation to preferentially perform another job while image forming apparatus MFP performs some sort of job.

Fig. 3 illustrates the key layout only by way of example, and the layout may properly be designed according to the functions provided by image forming apparatus MFP and corresponding user interfaces.

### <D. Slide Mode of Operation Panel Device>

As described above, operation panel device 1 of the present embodiment may be configured such that the two panel devices are relatively movable along a predetermined plane. Therefore, any one of the panel devices may be fixed (mounted on image forming apparatus MFP), and the slide direction may properly be designed. Four typical slide modes will be described below.

### [d1: Slide Mode (First Variation) of Operation Panel Device]

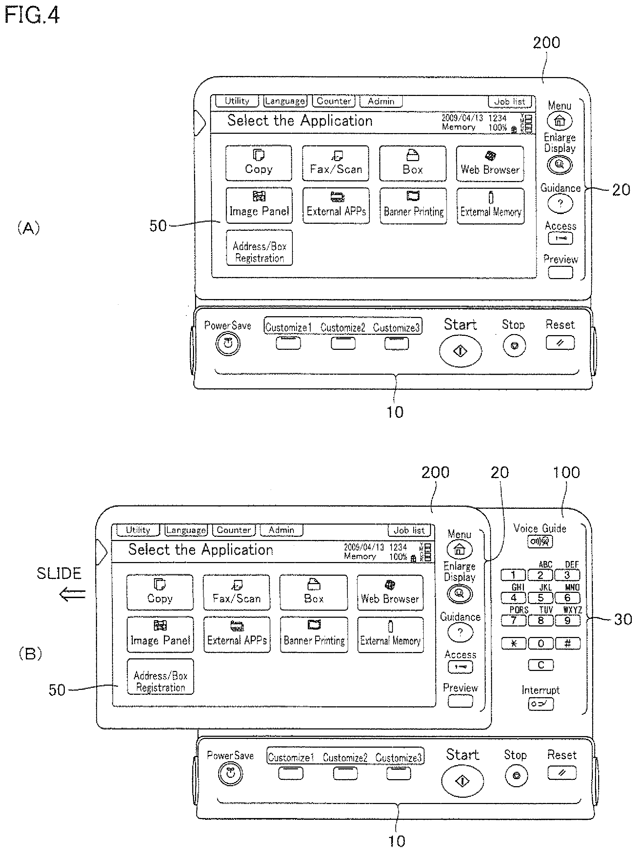

Fig. 4 is a schematic diagram illustrating a slide mode (first variation) of operation panel device I according to the embodiment of the present invention. In operation panel device 1 illustrated in Fig. 4, first panel 100 is mounted on image forming apparatus MFP. Fig. 4(A) illustrates the state in which operation panel device 1 is closed, and Fig. 4(B) illustrates the state in which operation panel device 1 is opened. First panel 100 is fixed to image forming apparatus MFP while second panel 200 is slidable in the horizontal direction on the drawing sheet.

More specifically, in the operation panels illustrated in Fig. 4, first panel 100 is fixed to image forming apparatus MFP, and second panel 200 is disposed opposite to image forming apparatus MFP with respect to first panel 100. The projection area of second panel 200 to the plane parallel to the display surface of second panel 200 is smaller than the projection area of first panel 100. In other words, the surface area of second panel 200 is smaller than the surface area of first panel 100. Because of the difference between the projection areas, the exposed region is generated in first panel 100 independent from the position relative to second panel 200. Operation key group 10 is disposed in the region that is exposed independent from the position relative to second panel 200. Operation key group 30, which is disposed in the region that is exposed when first panel 100 and second panel 200 do not overlap each other, is disposed in first panel 100. Operation key group 30 includes the numeric keypad of the keys used for inputting a numeric character.

In second panel 200, operation key group 20 is disposed in the region that is exposed independent from the position relative to first panel 100.

Display device 50 that provides the display surface is mounted on the panel different from the panel (in the case of Fig. 4, first panel 100) fixed to image forming apparatus MFP. An advantage is gained on the design of strength by disposing display device 50 of a relatively light weight on the moving panel.

### [d2: Slide Mode (Second Variation) of Operation Panel Device]

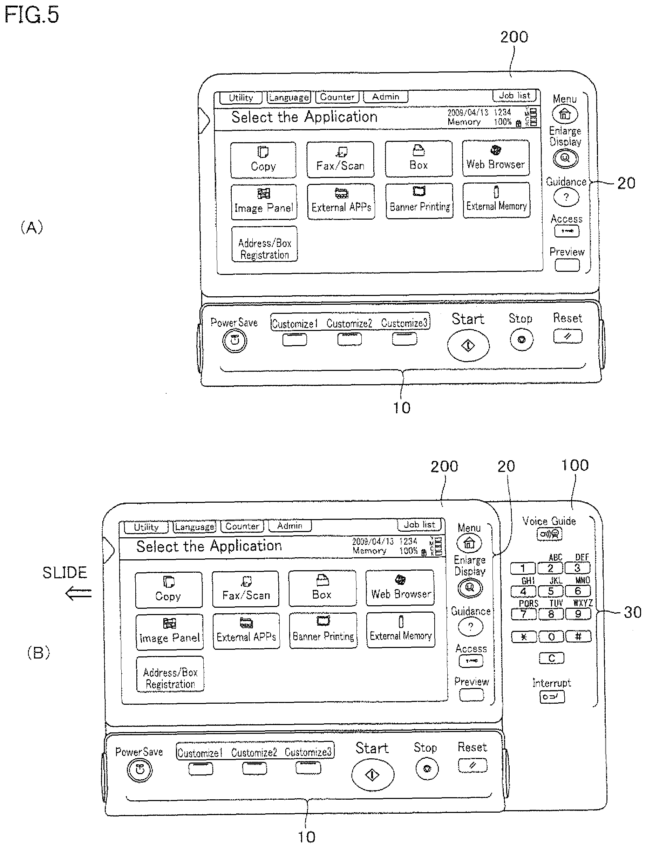

Fig. 5 is a schematic diagram illustrating a slide mode (second variation) of operation panel device 1 according to the embodiment of the present invention. In operation panel device 1 illustrated in Fig. 5, first panel 100 is mounted on image forming apparatus MFP. Fig. 5(A) illustrates the state in which operation panel device 1 is closed, and Fig. 5(B) illustrates the state in which operation panel device 1 is opened. First panel 100 is fixed to image forming apparatus MFP while second panel 200 is slidable in the horizontal direction on the drawing sheet.

More specifically, in the operation panels in Fig. 5, first panel 100 is fixed to image forming apparatus MFP, and second panel 200 is disposed opposite to image forming apparatus MFP with respect to first panel 100. However, the projection areas of first panel 100 and second panel 200 to the plane parallel to the display surface are substantially equal to each other. Therefore, in operation panel device 1 illustrated in Fig. 5, operation key group 10 is disposed not on first panel 100 but on second panel 200. That is, in second panel 200, operation key groups 10 and 20 are disposed in the region that is exposed independent from the position relative to first panel 100.

On the other hand, operation key group 30 is disposed in the region that is exposed when first panel 100 and second panel 200 do not overlap each other in first panel 100. Operation key group 30 includes the numeric keypad of the keys used for inputting a numeric character.

Also in the mode illustrated in Fig. 5, display device 50 that provides the display surface is mounted on the panel different from the panel (in the case of Fig. 5, first panel 100) fixed to image forming apparatus MFP.

### [d3: Slide Mode (Third Variation) of Operation Panel Device]

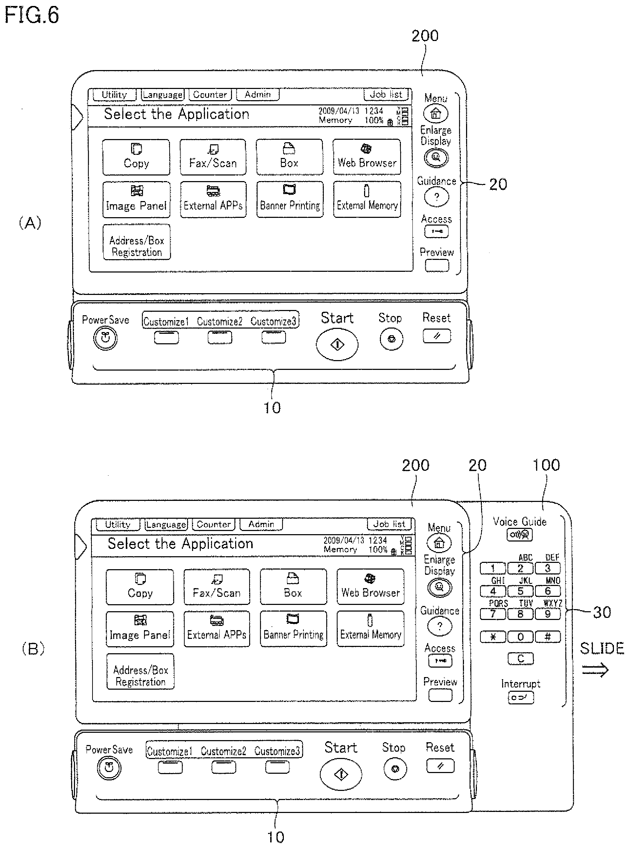

Fig. 6 is a schematic diagram illustrating a slide mode (third variation) of operation panel device 1 according to the embodiment of the present invention. In operation panel device 1 illustrated in Fig. 6, second panel 200 is mounted on image forming apparatus MFP. Fig. 6(A) illustrates the state in which operation panel device 1 is closed, and Fig. 6(B) illustrates the state in which operation panel device 1 is opened. Second panel 200 is fixed to image forming apparatus MFP while first panel 100 is slidable in the horizontal direction on the drawing sheet.

More specifically, in the operation panels illustrated in Fig. 6, second panel 200 is fixed to image forming apparatus MFP, and first panel 100 is disposed closer to image forming apparatus MFP with respect to second panel 200. However, the projection areas of first panel 100 and second panel 200 to the plane parallel to the display surface are substantially equal to each other. Therefore, in operation panel device 1 illustrated in Fig. 6, operation key group 10 is disposed not on first panel 100 but on second panel 200. That is, in second panel 200, operation key groups 10 and 20 are disposed in the region that is exposed independent from the position relative to first panel 100.

On the other hand, operation key group 30 is disposed in the region that is exposed when first panel 100 and second panel 200 do not overlap each other in first panel 100. Operation key group 30 includes the numeric keypad of the key group used for inputting a numeric character.

In the mode illustrated in Fig. 6, display device 50 that provides the display surface is mounted on the panel (in the case of Fig. 6, second panel 200) fixed to image forming apparatus MFP.

### [d4: Slide Mode (Fourth Variation) of Operation Panel Device]

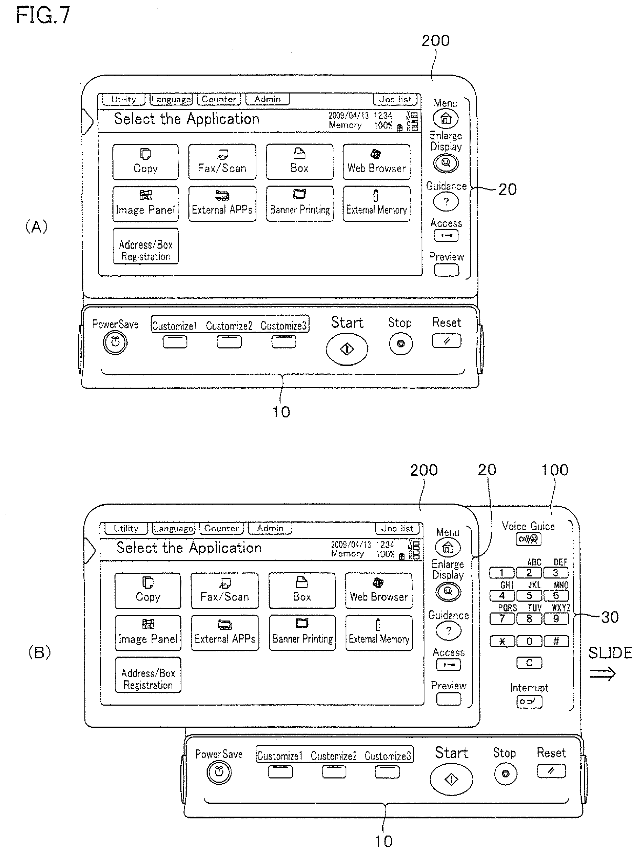

Fig. 7 is a schematic diagram illustrating a slide mode (fourth variation) of operation panel device 1 according to the embodiment of the present invention. In operation panel device 1 illustrated in Fig. 7, second panel 200 is mounted on image forming apparatus MFP. Fig. 7(A) illustrates the state in which operation panel device 1 is closed, and Fig. 7(B) illustrates the state in which operation panel device 1 is opened. Second panel 200 is fixed to image forming apparatus MFP while first panel 100 is slidable in the horizontal direction on the drawing sheet.

More specifically, in the operation panels illustrated in Fig. 7, second panel 200 is fixed to image forming apparatus MFP, and first panel 100 is disposed closer to image forming apparatus MFP with respect to second panel 200. The projection area of second panel 200 to the plane parallel to the display surface of second panel 200 is smaller than the projection area of first panel 100. In other words, the surface area of second panel 200 is smaller than the surface area of first panel 100. In other words, the projection area of second panel 200 is smaller than the surface area of first panel 100. Because of the difference between the surface areas, the exposed region is generated in first panel 100 independent from the position relative to second panel 200. Operation key group 10 is disposed in the region that is exposed independent from the position relative to second panel 200. Operation key group 30, which is disposed in the region that is exposed when first panel 100 and second panel 200 do not overlap each other, is disposed in first panel 100. Operation key group 30 includes the numeric keypad of the keys used for inputting a numeric character.

In second panel 200, operation key group 20 is disposed in the region that is exposed independent from the position relative to first panel 100.

### [d5: Slide Mode (Fifth Variation) of Operation Panel Device]

Figs. 4 to 7 illustrate the modes in which operation key group 30 including the numeric keypad projects rightward on the drawing sheet by sliding. Alternatively, operation key group 30 may project leftward on the drawing sheet. According to the slide modes in Figs. 4 to 7, there are the operation panels (Figs. 6 and 7) in which the moving panel slides to the side same as the side on which operation key group 30 is exposed and the operation panels (Figs. 4 and 5) in which the moving panel slides to the side opposite to the side on which operation key group 30 is exposed.

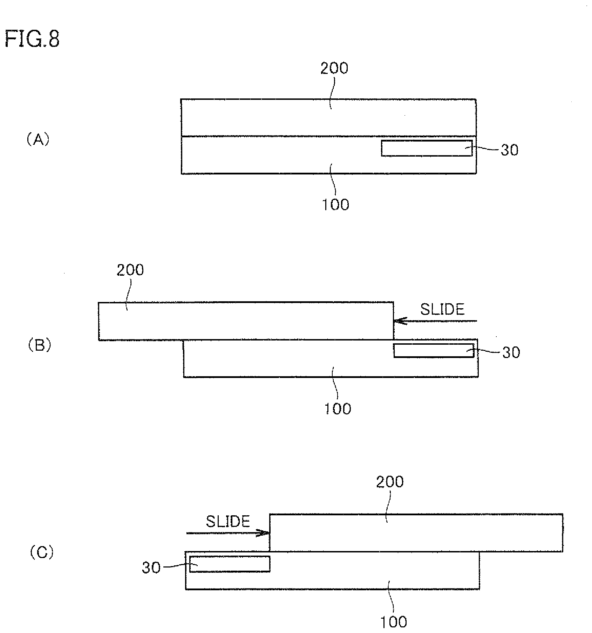

Fig. 8 is a schematic diagram illustrating a slide mode (fifth variation) of operation panel device 1 according to the embodiment of the present invention. (A) to (C) of Fig. 8 are schematic diagrams of operation panel device 1 when viewed from a bottom surface side.

By way of example, (A) and (B) of Fig. 8 schematically illustrate the "closed state" and the "opened state" of operation panel device 1 in Fig. 4. In the examples in (A) and (B) of Fig. 8, operation key group 30 including the numeric keypad disposed in a right region on the drawing sheet of first panel 100 is exposed when second panel 200 slides in the leftward direction, which allows the user to perform an operation.

On the other hand, in (C) of Fig. 8, operation key group 30 including the numeric keypad is disposed in a left region on the drawing sheet of first panel 100, and second panel 200 slides in the rightward direction on the drawing sheet to enable the user to perform an operation.

Generally, for a right-handed user, desirably operation key group 30 including the numeric keypad is exposed to the right side of the user from the viewpoint of improving the operability. On the other hand, for a left-handed user, desirably operation key group 30 including the numeric keypad is exposed to the left side of the user. Therefore, operation key group 30 including the numeric keypad is desirably configured to be exposed to an arbitrary side according to the dominant hand of the user.

### [d6: Summary]

As illustrated in Figs. 4 to 8, operation key group 10, 20, and 30 each of which includes at least one hardware key can properly be disposed in (1) the region that is always disposed in the fixed panel, (2) the region that is always disposed in the moving panel, (3) the region exposed when the fixed panel is opened, and (4) the region exposed when the moving panel is opened. The hardware keys, the number of which is growing with the progress of the multiple functions of image forming apparatus MFP, can be laid out while being dispersed. Therefore, the panel surface (operation surface) of the operation panel device can be organized to prevent enlargement of the operation panel device more than necessary.

More specifically, the operation key groups including the hardware keys can properly be laid out according to applications, such as (i) being disposed in the position fixed relatively to the main body of image forming apparatus MFP, (ii) being disposed in the position fixed relatively to the display device (however, in the case that the panel including the display device moves, the operation key group moves in association with the movement of the panel), or (iii) being disposed in the position fixed relatively to the numeric keypad (however, in the case that the panel including the numeric keypad moves, the operation key group moves in association with the movement of the panel).

As described above, the operation key group including the hardware keys such as the numeric keypad is disposed in the region (usually hidden region) that is exposed only when the panel located above (closer to the user) moves relatively to the panel located below (closer to image forming apparatus MFP), so that the operation keys that are not always used by the user can be hidden. That is, space saving of the operation panel device can be achieved by hiding the operation keys having the relatively low use frequency. In this case, the panel is slid to expose the operation key groups, which allows the user to perform an operation.

### <E. Use Frequency of Numeric Keypad in Operation Panel Device>

In a use mode of the Multi-Function Peripheral on which the plurality of functions are mounted, a mode in which an electronic document produced by a personal computer or the like is printed has been becoming dominant from the conventional mode in which a user directly operates the operation panel device to copy (duplicate) a paper original text. In many offices, image forming apparatus MFP is frequently used as a "printer" that is an output destination of the personal computer. It is estimated that the use frequency of the numeric keypad provided in operation panel device 1 of image forming apparatus MFP is decreased as the use as the print destination of the personal computer has been becoming dominant. However, because the conventional application for copying a paper original text still remains, the numeric keypad cannot be eliminated. Additionally, the numeric keypad is desirably disposed from the viewpoint of the universal design.

The numeric keypad is disposed in the region (usually hidden region) that is exposed only when the panel located above (closer to the user) moves relatively to the panel located below (closer to image forming apparatus MFP). In this case, the space saving of operation panel device 1 can be achieved while the conventional user operation can be dealt with.

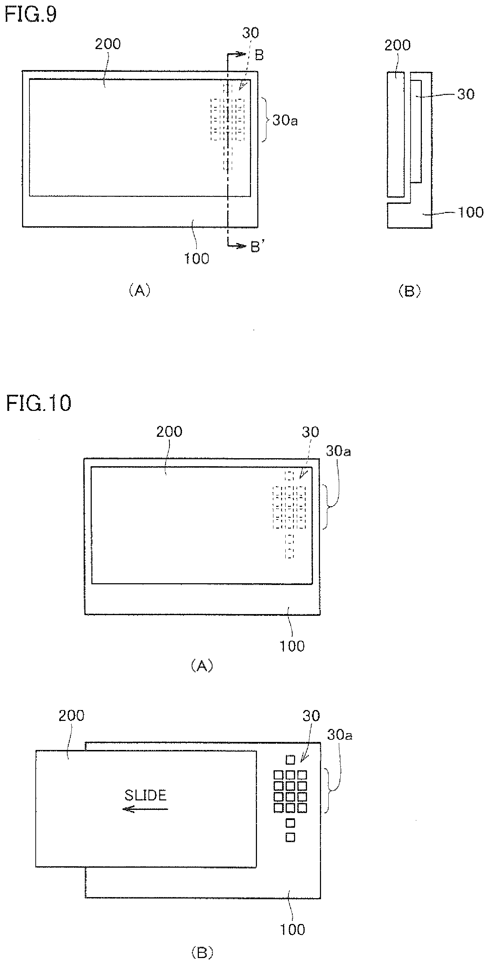

Figs. 9 to 12 are schematic diagrams each illustrating an array example of the numeric keypad of operation panel device 1 according to the embodiment of the present invention. Fig. 9 illustrates the array example of the numeric keypad corresponding to operation panel device 1 in Fig. 4. Fig. 9(A) illustrates an example in which operation key group 30 including numeric keypad 30a is disposed on the right side on the drawing sheet of first panel 100. In this case, as illustrated in Fig. 9(B), numeric keypad 30a is disposed while being buried in first panel 100.

In the case that numeric keypad 30a is arrayed longitudinally (disposed so as to spread in a vertical direction on the drawing sheet) in the panel located below (closer to image forming apparatus MFP) as illustrated in Fig. 9, the slide direction of the panel located above (closer to the user) is desirably set to the horizontal direction on the drawing sheet relative to the front surface of operation panel device 1 as illustrated in Fig. 10. An array order of numeric keypad 30a is defined pursuant to the universal design, so that the position of numeric keypad 30a can easily be specified.

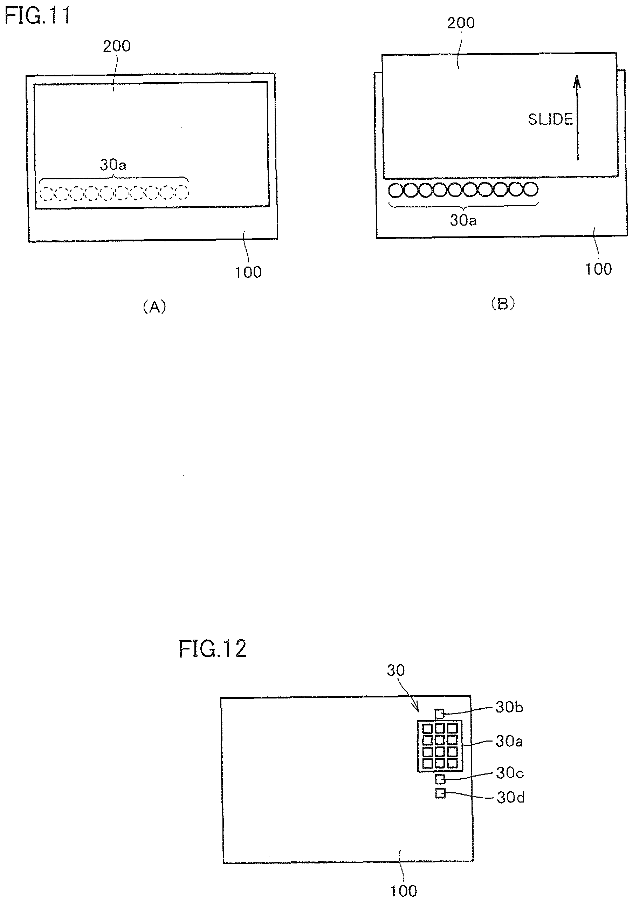

On the other hand, as illustrated in Fig. 11, numeric keypad 30a can horizontally be arrayed (disposed so as to spread in a horizontal direction on the drawing sheet) in the panel located below (closer to image forming apparatus MFP). In this case, as illustrated in Fig. 11, the slide direction of the panel located above is desirably set to the vertical direction relative to the front surface of operation panel device 1. Thus, in the case that numeric keypad 30a is horizontally arrayed in the panel located below, advantageously a slide amount (travel distance) of the panel located above can further be decreased.

As illustrated in Fig. 10, in such a case that numeric keypad 30a is arrayed pursuant to a predetermined rule, voice guide key 30b and/or interrupt key 30d are desirably disposed close to numeric keypad 30a. That is, as illustrated in Fig. 12, operation key group 30 disposed on first panel 100 includes voice guide key 30b and interrupt key 30d, which are disposed close to numeric keypad 30a of the key group used for inputting a numeric character.

Thus, voice guide key 30b and interrupt key 30d are disposed close to numeric keypad 30a that is disposed in the usually hidden region, whereby a degree of concentration of the hardware key array is enhanced to improve the operability of the user.

### <F. Numeric Keypad in Operation Panel Device and Dominant Hand of User>

In the case that numeric keypad 30a is disposed in the region that is exposed when first panel 100 and second panel 200 do not overlap each other, the mode may be changed according to the dominant hand of the user in order to enhance the operability of the user. Such examples will be described below.

### (f1: Mode corresponding to Dominant Hand (First Variation))

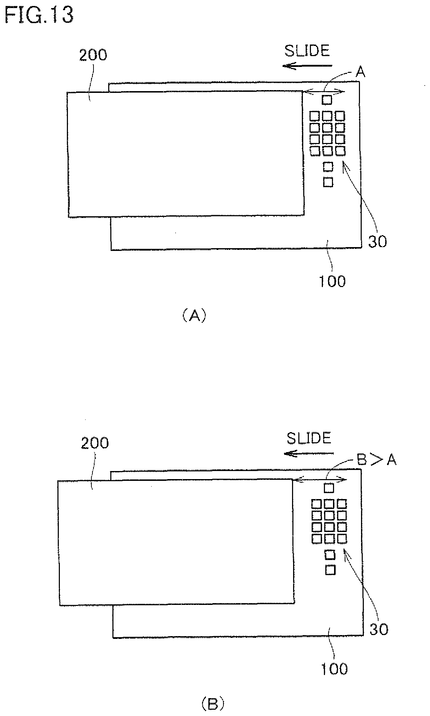

Fig. 13 is a schematic diagram illustrating a configuration for exposing the numeric keypad of operation panel device 1 according to the embodiment of the present invention. In operation panel device 1 illustrated in Fig. 13, operation key group 30 including the numeric keypad is disposed in the region that is usually hidden in first panel 100. It is assumed that the numeric keypad is arrayed longitudinally (disposed so as to spread in the vertical direction on the drawing sheet).

In this configuration, the slide amount (travel distance) of second panel 200 located above desirably varies according to the dominant hand. That is, there is a difference in height (gap) between the surface of the numeric keypad located in first panel 100 and the surface of second panel 200, and the user's hand interferes with (an end surface or the like of) second panel 200 if the height is close to the numeric keypad, thereby degrading the operability. Therefore, a margin (space) is desirably changed in a neighborhood of the numeric keypad according to the dominant hand of the user.

More specifically, in the mode in which second panel 200 is slid in the leftward direction on the drawing sheet as illustrated in Fig. 13, the slide amount (travel distance) of second panel 200 located above is set to A for the right-handed user, and the slide amount (travel distance) of second panel 200 is set to B (> A) for the left-handed user. The right-handed user does not interfere with second panel 200 because the user operates operation key group 30 by a hand from the right side on the drawing sheet. Therefore, second panel 200 is enough to be slid until operation key group 30 is exposed. On the other hand, the left-handed user interferes easily with second panel 200 because the user operates operation key group 30 by the hand from the left side on the drawing sheet. Therefore, desirably second panel 200 is slid such that operation key group 30 is sufficiently exposed until the user ensures the space in which the user's hand can sufficiently move.

A configuration, in which the dominant hand of the user is previously set and the user is identified to automatically slide second panel 200 by the corresponding travel distance, may be adopted as a mechanism that changes the slide amount. Alternatively, a latch mechanism is provided such that second panel 200 is fixed in each position, and the user may slide second panel 200 to the position corresponding to the dominant hand of the user.

The relation of the slide amount is inverted when second panel 200 is slid in the rightward direction on the drawing sheet.

As described above, in operation panel device 1 illustrated in Fig. 13, the mechanism that can relatively move first panel 100 and second panel 200 is configured so as to vary the exposure amount of the region where operation key group 30 of second panel 200 is disposed in a plurality of steps. The adoption of the configuration can improve the user's operability to the numeric keypad, and correspond to both the right-handed user and the left-handed user.

### (f2: Mode corresponding to Dominant Hand (Second Variation))

Operation panel device 1, which is configured such that different region is exposed according to the dominant hand of the user as described above with reference to Fig. 8, will be described below.

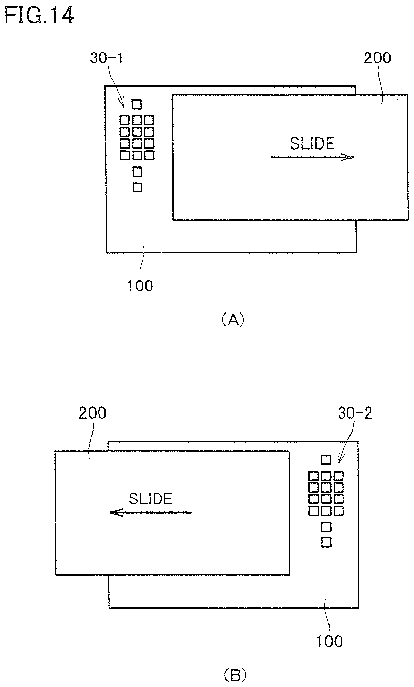

Fig. 14 is a schematic diagram illustrating a configuration for exposing the numeric keypad of operation panel device 1 according to the embodiment of the present invention. Referring to Fig. 14, operation panel device 1 is configured such that operation key groups 30-1 and 30-2 including the numeric keypads are disposed on the left and right sides on the drawing sheet of first panel 100 located below (closer to image forming apparatus MFP). Fig. 14(A) illustrates the state in which operation key group 30-1 disposed on the left side on the drawing sheet of first panel 100 is exposed by sliding second panel 200 in the rightward direction on the drawing sheet. Fig. 14(B) illustrates the state in which operation key group 30-2 disposed on the right side on the drawing sheet of first panel 100 is exposed by sliding second panel 200 in the leftward direction on the drawing sheet.

Thus, the user can arbitrarily select the slide direction of second panel 200 according to the dominant hand of the user. As illustrated in Fig. 14(A), the left-handed user slides second panel 200 to expose the left-side operation key group 30-1 located closer to the dominant hand of the user. As illustrated in Fig. 14(B), the right-handed user slides second panel 200 to expose the right-side operation key group 30-2 located closer to the dominant hand of the user.

As described above, in operation panel device 1 illustrated in Fig. 14, first panel 100 and second panel 200 can relatively move in the rightward and leftward directions on the drawing sheet, and second panel 200 includes operation key group 30-1 disposed in the region (left side on the drawing sheet) that is exposed when second panel 200 relatively moves in the rightward direction on the drawing sheet, and operation key group 30-2 disposed in the region (right side on the drawing sheet) that is exposed when second panel 200 relatively moves in the leftward direction on the drawing sheet.

The adoption of the configuration can improve the user's operability to the numeric keypad, and correspond to both the right-handed user and the left-handed user.

### (f3: Mode corresponding to Dominant Hand (Third Variation))

A configuration, in which a common operation key group including the numeric keypad disposed below (closer to image forming apparatus MFP) is exposed by sliding second panel 200 located above (closer to the user) to the direction corresponding to the dominant hand of the user, will be described below.

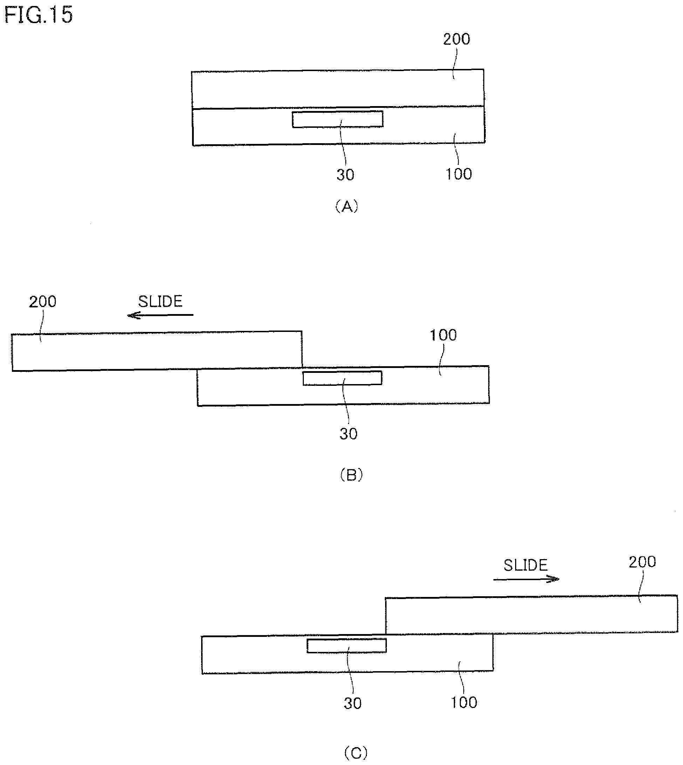

Fig. 15 is a schematic diagram illustrating a configuration for exposing the numeric keypad of operation panel device 1 according to the embodiment of the present invention. (A) to (C) of Fig. 15 are sectional views of operation panel device 1 when viewed from the bottom surface side.

Referring to Fig. 15(A), in operation panel device 1, first panel 100 in which operation key group 30 including the numeric keypad is disposed in the central portion is located below (closer to image forming apparatus MFP), and second panel 200 can slide in both the rightward and leftward directions relative to first panel 100 on the drawing sheet. As illustrated in Fig. 15(B), the right-handed user slides second panel 200 in the leftward direction on the drawing sheet, which allows the user to operate operation key group 30 while the user's hand does not interfere with second panel 200. On the other hand, as illustrated in Fig. 15(C), the left-handed user slides second panel 200 in the rightward direction on the drawing sheet, which allows the user to operate operation key group 30 while the user's hand does not interfere with second panel 200.

As described above, in operation panel device 1 illustrated in Fig. 15, first panel 100 and second panel 200 are configured to be relatively movable in the rightward and leftward directions on the drawing sheet. First panel 100 includes operation key group 30 disposed in the region, which is exposed when first panel 100 relatively moves in the leftward direction on the drawing sheet and also is exposed when first panel 100 relatively moves in the rightward direction on the drawing sheet.

The adoption of the configuration can improve the user's operability to the numeric keypad, and correspond to both the right-handed user and the left-handed user.

### <G. On-Keyboard Key Group in Operation Panel Device>

The operation panel device, on which an on-keyboard key group that is the key group used for inputting a character is mounted, will be described below. Typically the on-keyboard key group receives the operation to input a character such as an alphabet. For example, the on-keyboard key group is also used in the operation, in which the user inputs a URL (Uniform Resource Locator) of the access destination while a browser function is mounted on image forming apparatus MFP.

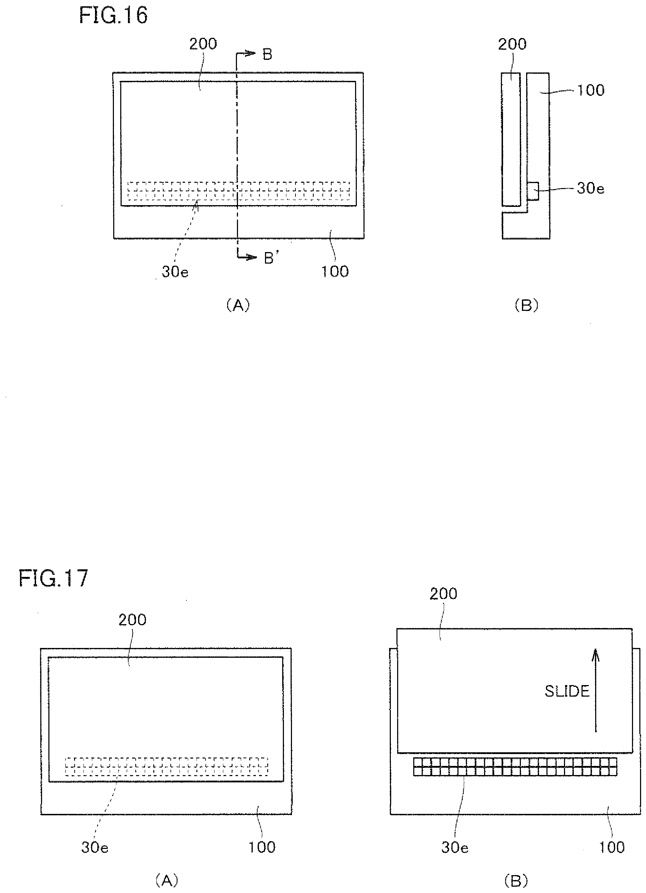

Figs. 16 and 17 are schematic diagrams each illustrating an array example of the on-keyboard key group of operation panel device 1 according to the embodiment of the present invention. Fig. 16 illustrates the array example of the on-keyboard key of operation panel device 1 in Fig. 4. Fig. 16(A) illustrates an example in which on-keyboard key group 30e is disposed on the lower side on the drawing sheet of first panel 100. In this case, as illustrated in Fig. 16(B), on-keyboard key group 30e is disposed while buried in first panel 100.

As illustrated in Fig. 17, in the case that on-keyboard key group 30e is arrayed laterally (disposed so as to be spread in the horizontal direction on the drawing sheet) in the panel located below (closer to image forming apparatus MFP), desirably the slide direction of the panel located above (closer to the user) is set to the vertical direction relative to the front surface of operation panel device 1 as illustrated in Fig. 17.

Because on-keyboard key group 30e includes the keys more than those of numeric keypad 30a, desirably on-keyboard key group 30e is arrayed laterally.

When on-keyboard key group 30e is arrayed in the region that is usually hidden in the panel located below, the space saving can be achieved as a whole by integrating on-keyboard key group 30e, compared with the conventional case in which it is necessary to provide the on-keyboard key group accommodation space independently of the operation surface.

### <H. Disposition of Numeric Keypad and On-keyboard key group in Operation Panel Device>

The operation panel device on which both the numeric keypad of the key group used for inputting a numeric character and the on-keyboard key group that is the key group used for inputting a character are mounted will be described below.

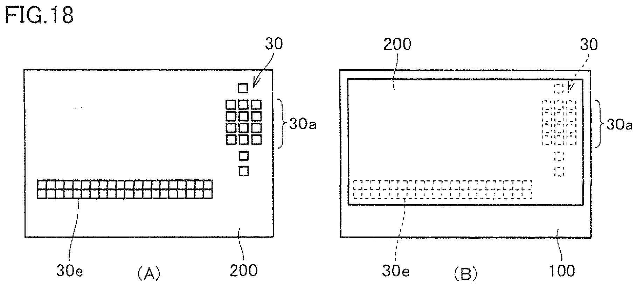

Figs. 18 to 20 are schematic diagrams each illustrating an array example of the numeric keypad and the on-keyboard key group of operation panel device 1 according to the embodiment of the present invention. Fig. 18 illustrates the array example of the numeric keypad and the on-keyboard key groups corresponding to operation panel device 1 in Fig. 4. Fig. 18(A) illustrates an example in which numeric keypad 30a is disposed on the right side on the drawing sheet of first panel 100 while on-keyboard key group 30e is disposed on on-keyboard key group 30e is disposed on the lower side on the drawing sheet of first panel 100. As illustrated in Fig. 18(B), second panel 200 is provided so as to cover numeric keypad 30a and on-keyboard key group 30e.

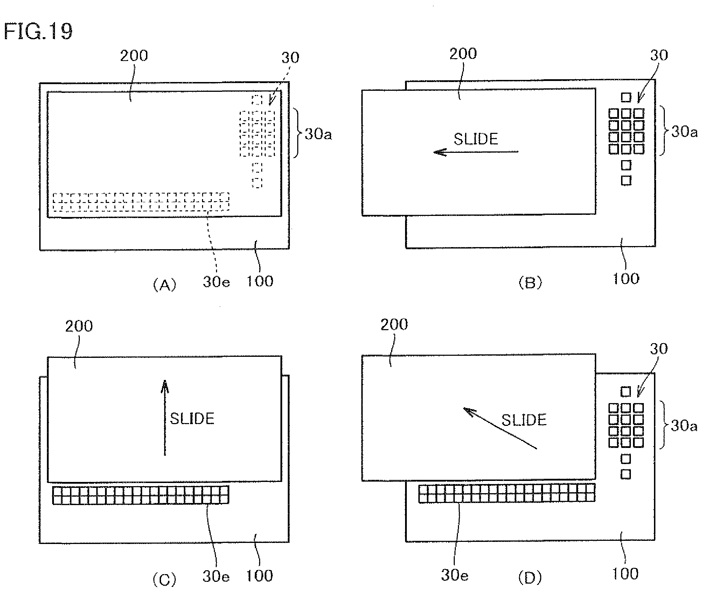

In the example in Fig. 18, numeric keypad 30a is longitudinally arrayed (disposed so as to be spread in the vertical direction on the drawing sheet), and on-keyboard key group 30e is arrayed laterally (disposed so as to be spread in the horizontal direction on the drawing sheet). As illustrated in (A) to (D) of Fig. 19, the panel located above (closer to the user) is slid in the necessary direction according to the keys to be used in numeric keypad 30a or in on-keyboard key group 30e. That is, in the case that the layout illustrated in Fig. 18 is adopted, the panel located above (closer to the user) is desirably slid both in the horizontal and vertical directions with respect to the front surface of operation panel device 1.

More specifically, as illustrated in Fig. 19(A), in the case that none of numeric keypad 30a and on-keyboard key group 30e is used, second panel 200 is located in a default position where second panel 200 covers numeric keypad 30a and on-keyboard key group 30e. The user who operates numeric keypad 30a slides second panel 200 in the leftward direction on the drawing sheet to expose numeric keypad 30a as illustrated in Fig. 19(B). The user who operates on-keyboard key group 30e slides second panel 200 to the upper side on the drawing sheet to expose on-keyboard key group 30e as illustrated in Fig. 19(C). The user who operates both numeric keypad 30a and on-keyboard key group 30e slides second panel 200 to the upper left side on the drawing sheet to expose numeric keypad 30a and on-keyboard key group 30e as illustrated in Fig. 19(D).

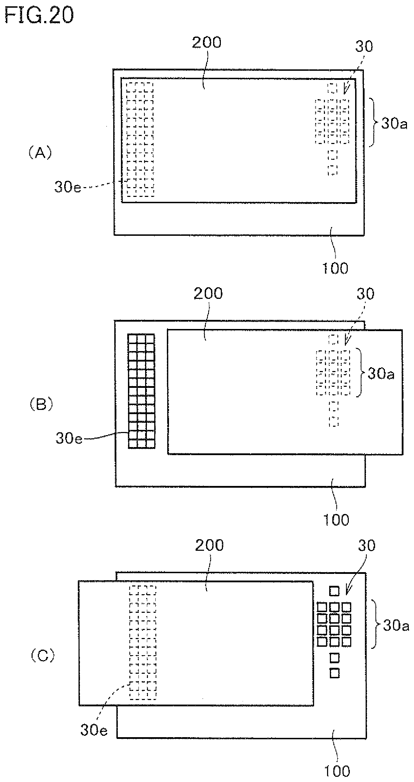

A layout in which numeric keypad 30a and on-keyboard key group 30e are disposed on respective sides of first panel 100 may be adopted as illustrated in (A) to (C) of Fig. 20. In this example, the panel located above (closer to the user) is slid in the transverse direction relative to the front surface of operation panel device 1.

More specifically, as illustrated in Fig. 20(A), in the case that both numeric keypad 30a and on-keyboard key group 30e are not used, second panel 200 second panel 200 is located in the default position where second panel 200 covers numeric keypad 30a and on-keyboard key group 30e. The user who operates on-keyboard key group 30e slides second panel 200 in the rightward direction on the drawing sheet to expose on-keyboard key group 30e as illustrated in Fig. 20(B). The user who operates numeric keypad 30a slides second panel 200 in the leftward direction on the drawing sheet to expose numeric keypad 30a as illustrated in Fig. 20(C).

When numeric keypad 30a and on-keyboard key group 30e are arrayed in the region that is usually hidden of the panel located below, the space saving can be achieved as a whole by integrating on-keyboard key group 30e, compared with the conventional case in which it is necessary to provide an accommodation space for the on-keyboard key group independently of the operation surface.

Because the direction in which the panel located above is slid can arbitrarily selected according to the key to be operated, the operability of numeric keypad 30a and on-keyboard key group 30e can be improved.

### <I. Configuration relating to Relative Movements of Panels>

A configuration for implementing the relative movements between the panels constituting operation panel device 1 will be described below.

### [i1: Slide movement in One Direction]

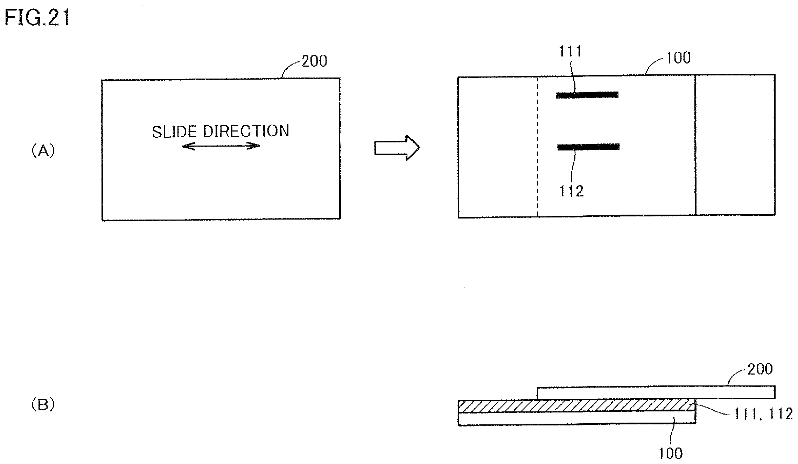

Fig. 21 is a schematic diagram illustrating a configuration example for implementing relative movements of the panels of operation panel device 1 according to the embodiment of the present invention. Fig. 21 illustrates an example of a slide mechanism corresponding to operation panel device 1 in Fig. 4. Referring to Fig. 21, in first panel 100 located below (closer to image forming apparatus MFP), rails 111 and 112 that slide second panel 200 are disposed along the slide direction in the surface facing second panel 200. Second panel 200 engages rails 111 and 112 while being movable in the horizontal direction on the drawing sheet.

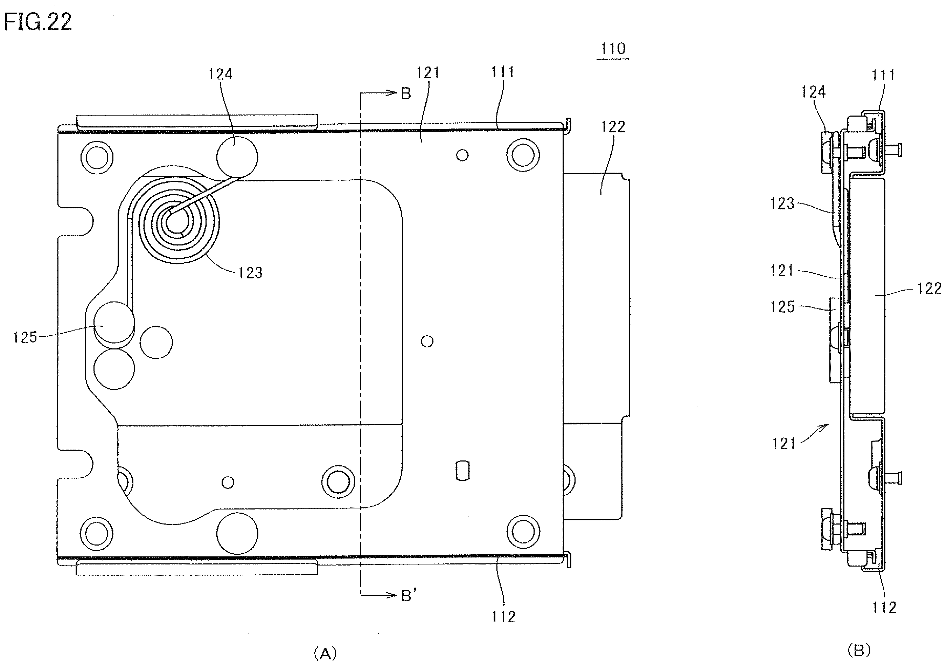

Figs. 22 to 24 are views each illustrating a slide mechanism 110 that implements the relative movements of the panels in Fig. 21. Referring to Fig. 22(A), slide mechanism 110 includes an upper movable piece 121 and a lower movable piece 122. As illustrated in Fig. 22(B), upper movable piece 121 and lower movable piece 122 move relatively along rails 111 and 112 that are provided in the vertical direction on the drawing sheet. Rails 111 and 112 regulate the movement of upper movable piece 121 in the directions except the slide direction, namely, the movement of upper movable piece 121 in the horizontal and vertical directions on the drawing sheet in Fig. 22(B), and rails 111 and 112 smoothly perform the relative movements of upper movable piece 121 and lower movable piece 122 in the slide direction.

Upper movable piece 121 and lower movable piece 122 are coupled through a torsion coil spring 123. Both ends of torsion coil spring 123 are coupled to upper movable piece 121 and lower movable piece 122 by hinge screws 124 and 125.

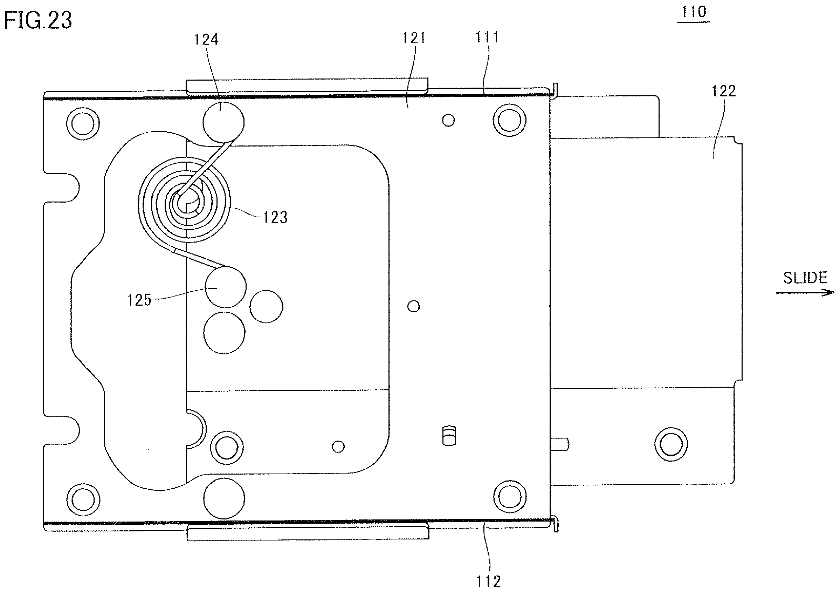

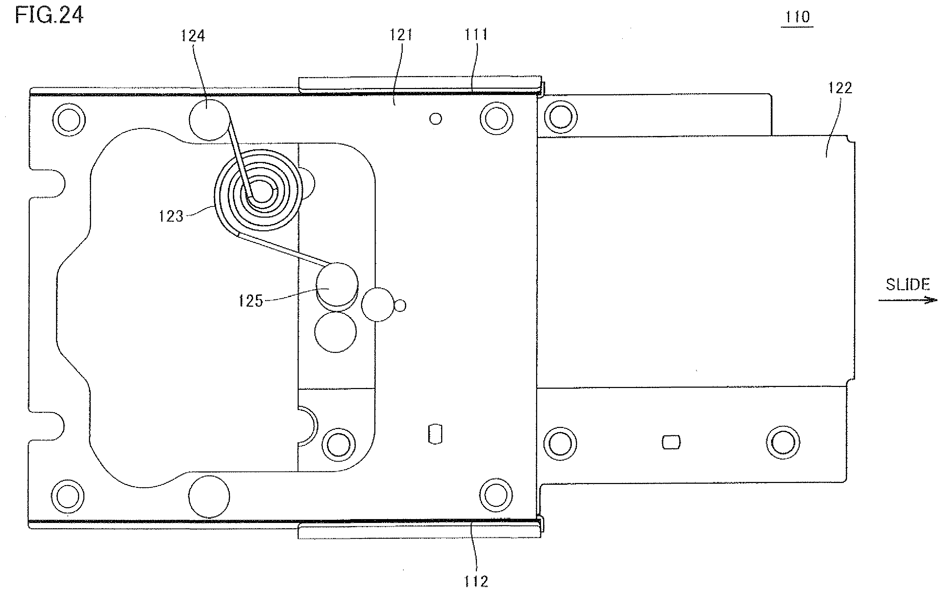

Fig. 22 illustrates slide mechanism 110 in a state corresponding to the closed state of operation panel device 1, and Fig. 24 illustrates slide mechanism 110 in a state corresponding to the opened state of operation panel device 1. Fig. 23 illustrates the state in which operation panel device 1 transitions from the closed state to the opened state. During the slide movement, a bias force of torsion coil spring 123 that connects the movable pieces 121 and 122 changes in association with the change in distance between upper movable piece 121 and lower movable piece 122. That is, as illustrated in Fig. 24, torsion coil spring 123 extends longest in the opened state of operation panel device 1, and a force that shortens the distance between upper movable piece 121 and lower movable piece 122, namely, a force that returns to the closed state is generated by the bias force of torsion coil spring 123. Therefore, in the case that the mechanism for fixing the panels is not provided, the panel slid by the user returns to the original closed state.

Upper movable piece 121 is mechanically coupled to second panel 200, and lower movable piece 122 is mechanically coupled to first panel 100. The slide movement between the panels in operation panel device 1 can be implemented by the mechanical operations in Figs. 22 to 24.

Figs. 21 to 24 each illustrate the configuration in which second panel 200 is slid in the horizontal direction on the drawing sheet. The configuration, in which second panel 200 is slid in the vertical direction on the drawing sheet, can also be implemented.

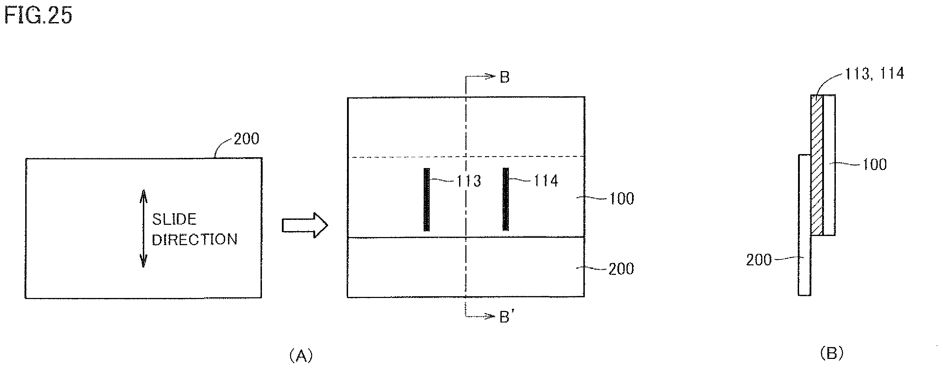

Fig. 25 is a schematic diagram illustrating another configuration example for implementing the relative movements of the panels of operation panel device 1 according to the embodiment of the present invention. As illustrated in Fig. 25, in the case that second panel 200 is slid in the vertical direction on the drawing sheet, rails 113 and 114 are disposed along the vertical direction on the drawing sheet in order to slide second panel 200. Therefore, the slide movement can be implemented with the slide mechanism 110.

### [i2: Slide movement in Plurality of Directions]

The slide movement in one direction is described with reference to Figs. 21 to 25. Additionally, the slide movement in a plurality of directions can be implemented by utilizing the slide mechanism.

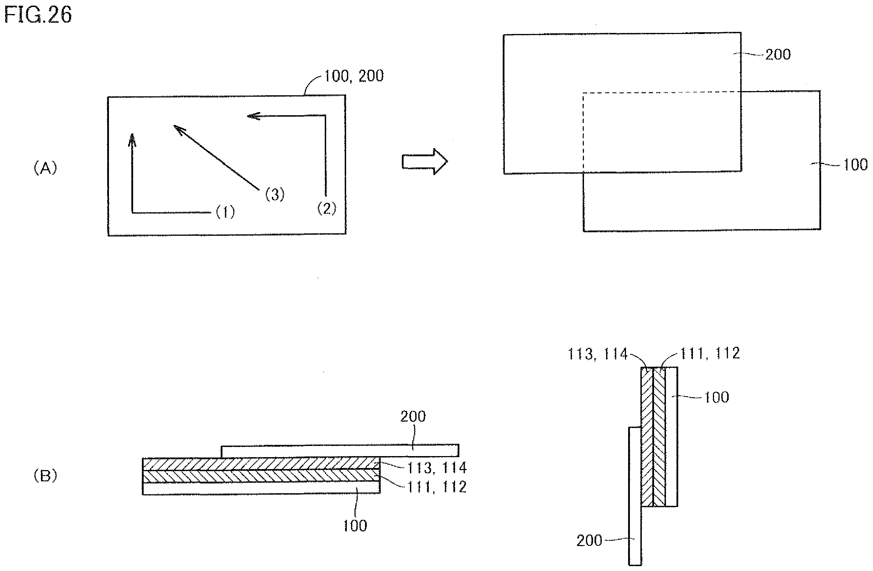

Fig. 26 is a schematic diagram illustrating a configuration example for implementing the relative movements of the panels of operation panel device of 1 the embodiment in the plurality of directions. Fig. 26(A) illustrates an example of the case that first panel 100 and second panel 200 are independently slid in the horizontal and vertical directions on the drawing sheet in operation panel device 1 in Fig. 4. In the case that the operation key groups are disposed in the plurality of regions as illustrated in Fig. 18, the operations such as (1) the slide movement in the upward direction after the slide movement in the leftward direction on the drawing sheet, (2) the slide movement in the leftward direction after the slide movement in the upward direction on the drawing sheet, and (3) the slide movement in the upper left direction on the drawing sheet are performed.

As a typical example for implementing the slide operations, as illustrated in Fig. 26(B), rails 111 and 112 that slide second panel 200 in the horizontal direction on the drawing sheet and rails 113 and 114 that slides second panel 200 in the vertical direction on the drawing sheet are provided in different layers between first panel 10 and second panel 200. More specifically, the slide operations can be implemented with use of two slide mechanisms 110 illustrated in Figs. 22 to 24.

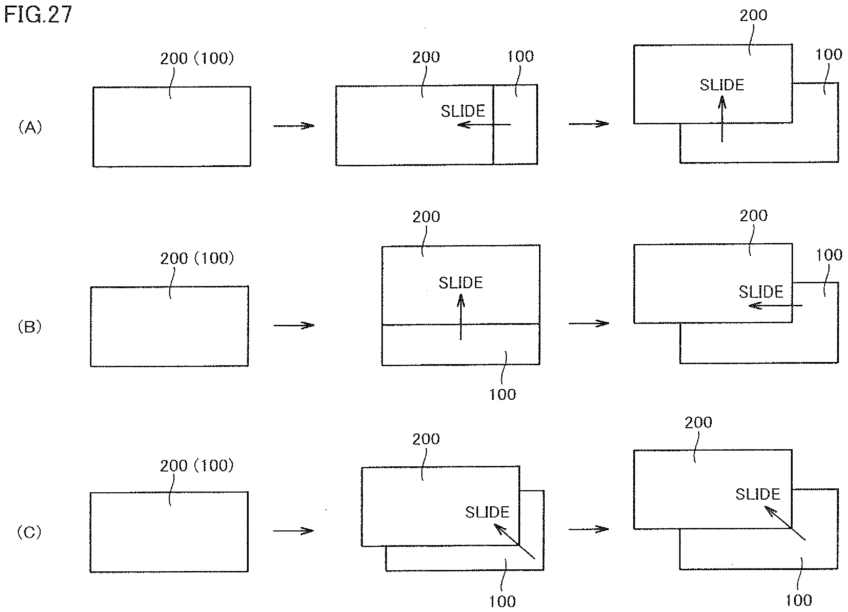

The slide movement in the plurality of directions can be implemented with a plurality of slide mechanisms 110. Fig. 27 is a schematic diagram illustrating more specifically the slide operation corresponding to slide movements (1) to (3) in Fig. 26(A).

In Fig. 27(A), it is assumed that second panel 200 is disposed above (closer to the user) while first panel 100 is disposed below (closer to image forming apparatus MFP). In the example in Fig. 27(A), after second panel 200 is slid in the leftward direction, second panel 200 is slid to the upper side on the drawing sheet.

In Fig. 27(B), it is assumed that second panel 200 is disposed above (closer to the user) while first panel 100 is disposed below (closer to image forming apparatus MFP). In the example in Fig. 27(B), after second panel 200 is slid to the upper side, second panel 200 is slid in the leftward direction on the drawing sheet.

In Fig. 27(C), it is assumed that second panel 200 is disposed above (closer to the user) while first panel 100 is disposed below (closer to image forming apparatus MFP). In the example in Fig. 27(C), second panel 200 is slid to the upper left on the drawing sheet side by a predetermined amount.

Even if the operation key groups are disposed in the different regions, the user can selectively expose and use only the necessary operation key group through the slide operation.

### <J. Configuration in which both Panel and Operation Key Group Move Relatively>

The above descriptions, the operation key group including the numeric keypad is fixed to one of the panels. Additionally, the operation key group may be configured to independently perform the slide movement.

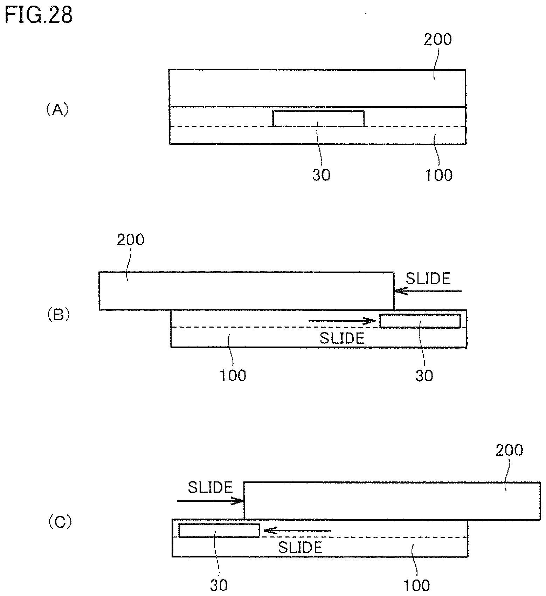

Fig. 28 is a schematic diagram illustrating a configuration in which both the panel and the operation key group are relatively movable. (A) to (C) of Fig. 28 each illustrate operation panel device 1 when viewed from the bottom surface side.

As illustrated in Fig. 28(A), operation key group 30 including the numeric keypad is disposed in the central portion of first panel 100 of operation panel device 1. The operation key group 30 is configured to be slidable in the horizontal direction on the drawing sheet. Second panel 200 and operation key group 30 move relatively according to the dominant hand of the user.

More specifically, as illustrated in Fig. 28(B), the right-handed user slides second panel 200 in the leftward direction on the drawing sheet while sliding operation key group 30 disposed on the inside of first panel 100 in the rightward direction on the drawing sheet. Therefore, operation key group 30 is exposed in the region on the right side on the drawing sheet of operation panel device 1, and the operability is improved for the right-handed user. On the other hand, as illustrated in Fig. 28(C), the left-handed user slides second panel 200 in the rightward direction on the drawing sheet while sliding operation key group 30 disposed on first panel 100 in the leftward direction on the drawing sheet. Therefore, operation key group 30 is exposed in the region on the left side on the drawing sheet of operation panel device 1, and the operability is improved for the left-handed user.

The slide movements of operation key group 30 and second panel 200 may be coordinated. In this case, when the user performs the slide movement of second panel 200, operation key group 30 is moved to a proper position in conjunction with the slide movement of second panel 200. Thus, when second panel 200 is slid, operation key group 30 located in the usually hidden region of first panel 100 is moved in the opposite direction in conjunction with second panel 200 and exposed.

In operation panel device 1 illustrated in Fig. 28, first panel 100 includes a movable unit in which operation key group 30 is disposed. In response to the relative movements of first panel 100 and second panel 200 in the rightward direction on the drawing sheet, the movable unit in which operation key group 30 is disposed is relatively moved in the opposite direction in first panel 100. In the case that first panel 100 and second panel 200 are relatively moved in the leftward direction on the drawing sheet, the movable unit in which operation key group 30 is disposed is relatively moved in the opposite direction.

The adoption of the configuration can improve the user's operability to the numeric keypad, and correspond to both the right-handed user and the left-handed user.

### <K. Devisal on Structure of Operation Panel Device>

Devisal on the structure of operation panel device 1 will be described below.

### [k1: Structure of Ridge Line Portion of Upper Panel]

In operation panel device 1 of the present embodiment, the operation key group including the numeric keypad formed on the surface of one of the panels is exposed by sliding the other panel. In this case, in the ridge line portion of the upper panel close to the exposed surface, desirably a side surface is smoothly formed from the viewpoint of enhancing the visibility and operability of the user.

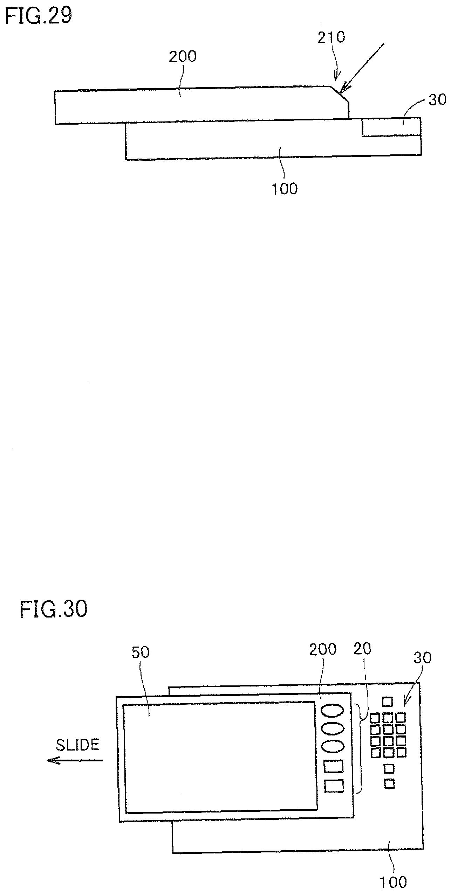

Fig. 29 is a schematic diagram illustrating a shape of the upper panel constituting operation panel device 1 of the present embodiment. Fig. 29 is a schematic diagram of operation panel device 1 when viewed from the bottom surface side.

As illustrated in Fig. 29, operation key group 30 is disposed in the region that is exposed when first panel 100 and second panel 200 does not overlap each other, and a ridge line portion 210 (the side surface of operation key group 30) of second panel 200, which is adjacent to operation key group 30, is smoothly formed. More specifically, ridge line portion 210 is inclined or chamfered with a predetermined curvature. That is, in operation panel device 1 illustrated in Fig. 29, ridge line portion 210 of second panel 200, which corresponds to the region exposed by the relative movements of first panel 100 and second panel 200, is formed into a non-right angle shape. The ridge line portion of the second panel adjacent to operation key group 30 is formed into the smooth shape, so that the visibility and operability of the user to operation key group 30 can be improved.

### [k2: Structure Enhancing Resistance to Pressing Force from User]

Because the operation key group (a plurality of hardware keys) is disposed in the panel located above (closer to the user) as described above, desirably a structure against a stress that is generated when the user operates (presses) the keys is adopted.

Fig. 30 is a schematic diagram illustrating a structure example for enhancing the resistance to the pressing force from the user. In the configuration example in Fig. 30, similarly to operation panel device 1 illustrated in Fig. 4, second panel 200 is disposed above (closer to the user), and first panel 100 is disposed below (closer to image forming apparatus MFP). Display device 50 is disposed in second panel 200 disposed above, and operation key group 20 including at least one key is disposed adjacent to display device 50. Second panel 200 is configured to slide in the leftward direction on the drawing sheet.

In second panel 200 disposed above, display device 50 (touch panel) is disposed on the same side as the moving direction (in the example in Fig. 30, the left side on the drawing sheet) of second panel 200, and operation key group 20 is disposed on the side opposite to the moving direction of second panel 200. Therefore, the state in which the region where operation key group 20 is disposed overlaps first panel 100 is maintained even in the state (opened state) in which second panel moves in the leftward direction on the drawing sheet and is projected, so that the region where operation key group 20 is disposed can withstand an excessive load that is generated when the user presses the operation key group.

That is, in operation panel device 1 illustrated in Fig. 30, in second panel 200 located above, display device 50 is disposed on the same side as the moving direction of second panel 200, and operation key group 20 is disposed on the side opposite to the moving direction. The adoption of the configuration can ensure strength of operation panel device 1.

### [k3: Structure Strengthening Coupling Force between Panels]

A structure that strengthens a coupling force between the two panels will be described below.

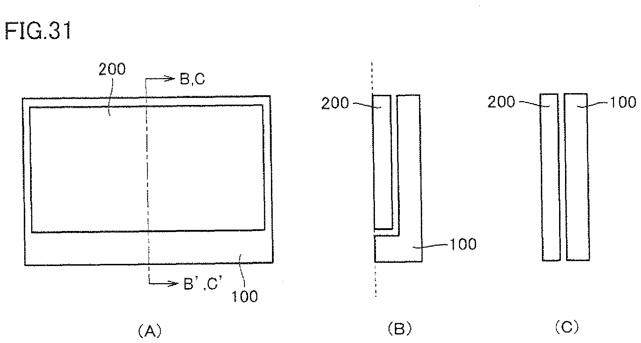

Fig. 31 is a schematic diagram illustrating a structure example for strengthening the coupling force between the two panels. In the configuration example in Fig. 31, similarly to operation panel device 1 illustrated in Fig. 4, second panel 200 is disposed above (closer to the user), and first panel 100 is disposed below (closer to image forming apparatus MFP).

More specifically, in operation panel device 1 illustrated in Fig. 31, first panel 100 located below has an L-shape in section. A bearing force that retains second panel 200 disposed above can partially be taken by forming the lower panel into the L-shape in section.

More specifically, as illustrated in Fig. 31(A), the projection area of second panel 200 disposed above is designed to be smaller than the projection area of first panel 100 disposed below. As illustrated in Fig. 31(B), the L-shape in section is adopted such that a lower shape, in which first panel 100 disposed below does not overlap second panel 200 disposed above, is projected to the same level as the surface of second panel 200. In this case, the surface of second panel 200 is configured so as not to be higher than the surface of first panel 100.

In operation panel device 1 illustrated in Fig. 30, first panel 100 is disposed on the side of image forming apparatus MFP, and second panel 200 is disposed opposite to image forming apparatus MFP with respect to first panel 100. The projection area of second panel 200 to the plane parallel to the display surface is smaller than the projection area of first panel 100. In the region exposed independent from the relative position of first panel 100, a position located on a line perpendicular to the display surface is substantially matched with the position in the exposed surface of second panel 200.

The adoption of the configuration can cause first panel 100 located below to partially take the bearing force retained by second panel 200 located above. As a result, as illustrated in Fig. 31 (C), the coupling force between the panels can be enhanced compared with the case that first panel 100 and second panel 200 are configured to have the substantially same sectional shape. In case that first panel 100 and second panel 200 are decoupled is association with the slide of second panel 200, second panel 200 can be retained in the position.

### <L. Fixing Structure between Panels>

In operation panel device 1 of the present embodiment, the operation key group disposed in the usually hidden region is exposed by the relative movements of the two panels. In slide mechanism 110 illustrated in Figs. 22 to 24, the two panels are forced into the closed state by torsion coil spring 123.

On the other hand, there is also a need to maintain the opened state depending on a usage pattern of the user. In such cases, desirably a fixing structure is adopted in order to fix a relatively positional relationship between the panels.

That is, there is provided a fixing function while the panel located above is projected from the panel located below. The utilization of the fixing function can deal with the need that the operation key group disposed in the usually hidden region is always exposed to the user. The operation key group disposed in the usually hidden region is fixed, so that stability can be improved when the user operates the operation key group or a possibility of breaking the panel can be reduced.

The structure that fixes the panels will be described below.

### [l1: Screw-Held Structure]

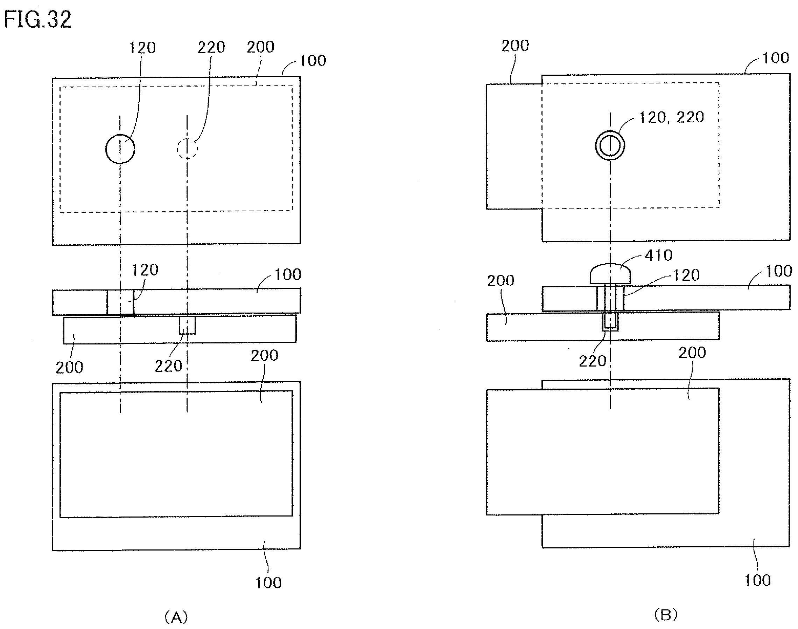

Fig. 32 is a schematic diagram (first variation) illustrating the fixing structure between the panels in operation panel device 1 according to the embodiment of the present invention. In the configuration example in Fig. 32, similarly to operation panel device 1 illustrated in Fig. 4, second panel 200 is disposed above (closer to the user), and first panel 100 is disposed below (closer to image forming apparatus MFP).

In the configuration example in Fig. 32(A), a through-hole 120 is made in the direction perpendicular to the display surface in part of first panel 100, and an engagement hole 220 that is opened to the side on which first panel 100 is located is made in second panel 200. As illustrated in Fig. 32(B), when operation panel device 1 is in the opened state, through-hole 120 of first panel 100 is aligned with engagement hole 220 of second panel 200 in the direction perpendicular to the display surface. That is, as illustrated in Fig. 32(B), a screw 410 pierces through-hole 120 and engagement hole 220 from a rear surface of first panel 100 on the side of image forming apparatus MFP, thereby positioning the relative relationship between first panel 100 and second panel 200.

Thus, in the configuration illustrated in Fig. 32, the screw-held mechanism at the rear side of first panel 100 located below is adopted in the method for fixing the panels. An easy-to-unlock shape is adopted in the method for fixing the panels.

That is, operation panel device 1 illustrated in Fig. 32 includes the fixing mechanism that fixes the state in which first panel 100 and second panel 200 do not overlap each other. The fixing mechanism is screw 410 that is a stopper piercing first panel 100 and second panel 200 from the side opposite to the display surface.

### [l2: Pawl-Shaped Lock Structure]

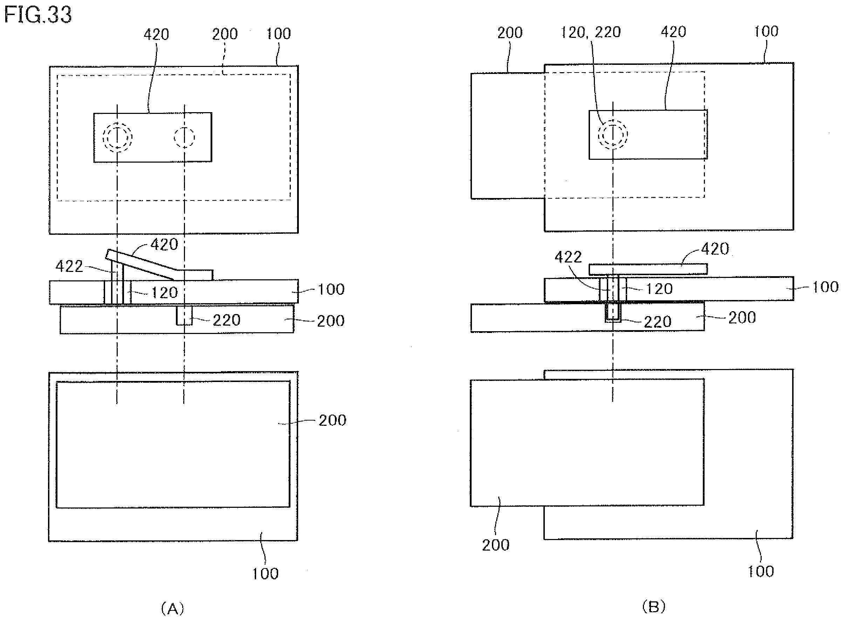

Fig. 33 is a schematic diagram (second variation) illustrating the fixing structure between the panels in operation panel device 1 according to the embodiment of the present invention. In the configuration example in Fig. 33, similarly to operation panel device 1 illustrated in Fig. 4, second panel 200 is disposed above (closer to the user), and first panel 100 is disposed below (closer to image forming apparatus MFP).

In the configuration example in Fig. 33, a piercing rod 422 and a spring 420 forcing piercing rod 422 are provided instead of screw 410 of the configuration example in Fig. 32. In the case that operation panel device 1 is in the opened state as illustrated in Fig. 33(B), through-hole 120 of first panel 100 is aligned with engagement hole 220 of second panel 200 in the direction perpendicular to the display surface, and a piercing rod 422 forced by spring 420 pierces the through-hole generated by the alignment. Therefore, the relative relationship between first panel 100 and second panel 200 is positioned. In the case that the relative relationship between first panel 100 and second panel 200 is changed, the user releases the bias force of spring 420.

In the configuration example in Fig. 33, a pawl-shaped lock mechanism at the rear side of first panel 100 located below is adopted in the method for fixing the panels. The easy-to-unlock shape is adopted in the method for fixing the panels.

That is, operation panel device 1 illustrated in Fig. 33 includes the fixing mechanism that fixes the state in which first panel 100 and second panel 200 do not overlap each other. The fixing mechanism is piercing rod 422 that is a rod-shaped stopper piercing first panel 100 and second panel 200 from the side opposite to the display surface. Additionally, spring 420 is provided to force the rod-shaped stopper (piercing rod 422).

### [l3: Lock Structure with Another Component]

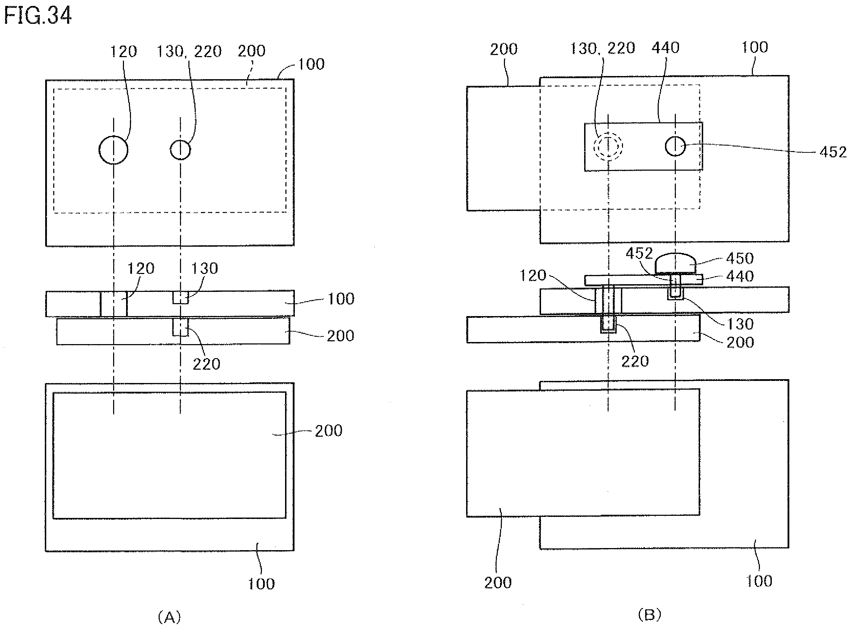

Fig. 34 is a schematic diagram (third variation) illustrating the fixing structure between the panels in operation panel device 1 according to the embodiment of the present invention.

In the configuration example in Fig. 34, a fixing component 440 customized to operation panel device 1 is mounted instead of screw 410 of the configuration example in Fig. 32. Fixing component 440 is formed into a modified T-shape. In the case that operation panel device 1 is in the opened state as illustrated in Fig. 34(B), through-hole 120 of first panel 100 is aligned with engagement hole 220 of second panel 200 in the direction perpendicular to the display surface, and part of fixing component 440 pierces the through-hole generated by the alignment. Therefore, the relative relationship between first panel 100 and second panel 200 is positioned.

An engagement hole 130 is made in first panel 100. Engagement hole 220 is used to mount fixing component 440 from the rear surface of operation panel device 1. That is, fixing component 440 is fixed to operation panel device 1 from the rear surface side by a screw 450 that pierces the through-hole made in fixing component 440 and engagement hole 130 made in the rear surface of first panel 100.

In the configuration example in Fig. 34, the lock mechanism with another component from the rear side of first panel 100 located below is adopted in the method for fixing the panels. The easy-to-unlock shape is adopted in the method for fixing the panels.

That is, operation panel device 1 illustrated in Fig. 34 includes the fixing mechanism that fixes the state in which first panel 100 and second panel 200 do not overlap each other. The fixing mechanism is fixing component 440 that is the stopper piercing first panel 100 and second panel 200 from the side opposite to the display surface.

### <M. Relationship between Operation Panel Device and Sheet Discharge Direction>

Because operation panel device 1 according to the present embodiment is mounted on image forming apparatus MFP, the more proper disposition position and slide direction are desirably designed from the viewpoint of the user's operation of image forming apparatus MFP. As to the relationship with the sheet discharge direction of image forming apparatus MFP, the more proper position and slide direction of operation panel device 1 will be described below.

### [m1: Mounting Position]

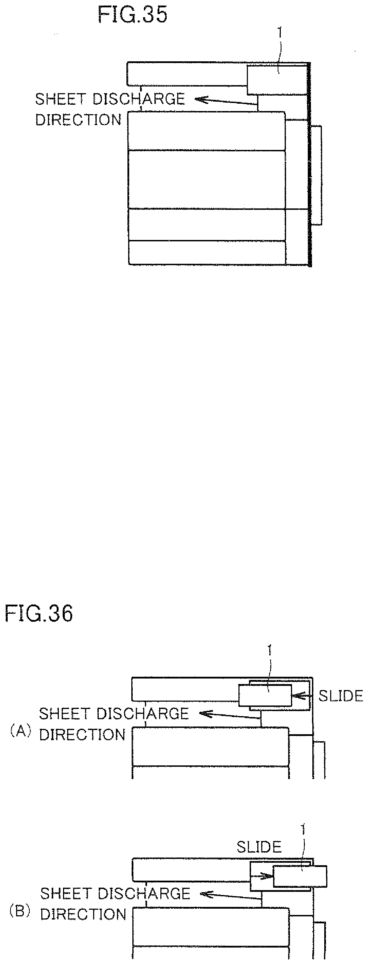

Fig. 35 is a view illustrating a desirable mounting position of operation panel device 1 according to the embodiment of the present invention. In the example in Fig. 35, operation panel device 1 is attached on the side opposite to the sheet discharge direction of image forming apparatus MFP. In this case, desirably operation panel device 1 is attached in a position that is not projected from a side surface of the main body of image forming apparatus MFP. That is, operation panel device 1 is attached such that the position of the side surface (in the example in Fig. 35, the side surface on the right side on the drawing sheet) of operation panel device 1 is matched with the position of the corresponding side surface (in the example in Fig. 35, the side surface on the right side on the drawing sheet) of image forming apparatus MFP, or such that the position of the side surface of operation panel device 1 is located inside the position of the corresponding side surface of image forming apparatus MFP.

That is, operation panel device 1 is disposed on the side opposite to the sheet discharge direction of image forming apparatus MFP and in the position that is not projected from the side surface of image forming apparatus MFP. The adoption of the mounting position can decrease the possibility of obstructing the user's visibility to the sheet discharge tray by operation panel device 1.

### [m2: Slide Direction (First Variation)]

Fig. 36 is a view illustrating a desirable slide direction of operation panel device 1 according to the embodiment of the present invention. In operation panel device 1 illustrated in Fig. 36(A), the slide direction of the moving panel is designed in the same direction as the sheet discharge direction of image forming apparatus MFP. That is, in operation panel device 1, the direction in which first panel 100 or second panel 200 is moved to generate the exposed region is identical to the sheet discharge direction of image forming apparatus MFP.

The panel moves in the same direction as the sheet discharge direction of image forming apparatus MFP by setting the slide direction in the above way, so that contact with the user and the possibility of breaking the operation panel due to the panel projected from image forming apparatus MFP can be reduced.

### [m3: Slide Direction (Second Variation)]

On the other hand, in operation panel device 1 illustrated in Fig. 36(B), the slide direction of the moving panel is designed in the direction opposite to the sheet discharge direction of image forming apparatus MFP. That is, in operation panel device 1, the direction in which first panel 100 or second panel 200 is moved to generate the exposed region is opposite to the sheet discharge direction of image forming apparatus MFP.

The panel of operation panel device 1 moves in the direction opposite to the sheet discharge direction of image forming apparatus MFP by setting the slide direction in the above way, so that the possibility of blocking the user's visibility to the sheet discharge tray by operation panel device 1 can be reduced.

### <N. Pop-Up Structure>

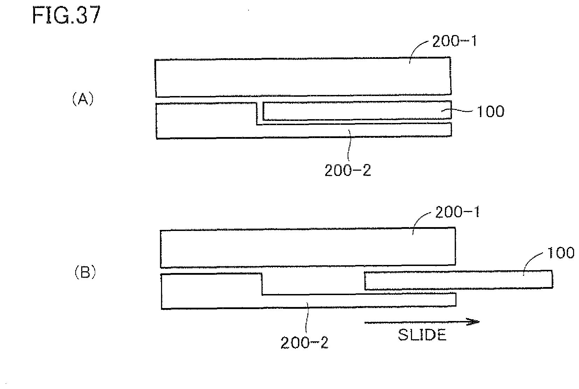

In the case that the second panel including display device 50 (touch panel) is fixed to image forming apparatus MFP as in the above case of operation panel device 1 illustrated in Fig. 6, the following pop-up structure may be adopted. The pop-up structure will be described with reference to Fig. 37.

Fig. 37 is a schematic diagram illustrating operation panel device 1 according to the embodiment of the present invention in which the pop-up structure is adopted. Referring to Figs. 6 and 37, operation key group 30 is provided in first panel 100, and first panel 100 moves relatively to second panel 200 that is fixed to image forming apparatus MFP. In this case, second panel 200 is configured by an upper chassis 200-1 and a lower chassis 200-2, and lower chassis 200-2 is fixed to image forming apparatus MFP. Upper chassis 200-1 and lower chassis 200-2 are formed into a substantially C-shape in section. That is, a space into which first panel 100 can be inserted is formed between upper chassis 200-1 and lower chassis 200-2. First panel 100 and a mechanism forcing first panel 100 to the outside are disposed in the space. When the user performs a predetermined operation, first panel 100 relatively moves so as to be popped up from second panel 200 (upper chassis 200-1 and lower chassis 200-2) as illustrated in Fig. 37(B).

Operation panel device 1 illustrated in Fig. 37 includes display device 50 that provides the display surface, and display device 50 is mounted on second panel 200 that is fixed to image forming apparatus MFP. On the other hand, the numeric keypad of the key group used for inputting a numeric character is disposed on first panel 100, not on second panel 200 that is fixed to image forming apparatus MFP. In the case that the user uses the numeric keypad, first panel 100 is popped up.

Thus, the space saving of the operation panel device can be achieved by hiding the operation keys having a relatively low use frequency. In this case, the panel is slid to expose the operation key group, which allows the user to operate the operation key group.

### <O. Another Aspect of the Invention>

According to another aspect of the present invention, the following operation panel device is included.

An operation panel device, mounted on an image forming apparatus, with a display surface, including:
first and second panels that are configured to be relatively movable along a plane parallel to the display surface, wherein
the first panel is disposed close to the image forming apparatus,
the second panel is disposed opposite to the image forming apparatus with respect to the first panel,
a projection area of the second panel to the plane parallel to the display surface is smaller than a projection area of the first panel,
at least one of the first and second panels includes a first group of keys disposed in a region that is exposed independent from relative positions of the first and second panels,
one of the first and second panels includes a second group of keys disposed in a region that is exposed when the first and second panels do not overlap each other, and
a position located on a line perpendicular to the display surface in the region that is exposed independent from the relative positions of the first and second panels is substantially matched with a position of an exposed surface of the second panel.

Although the present invention has been described and illustrated in detail it is clearly understood that the same is by way of illustration and example only and is not to be taken by way of limitation, the scope of the present invention being interpreted by the terms of the appended claims.

## Claims

1. An operation panel device (1), mounted on an image forming apparatus (MFP), with a display surface, the operation panel device (1) comprising first and second panels (100, 200) that are configured to be relatively movable along a plane parallel to said display surface, wherein
said first panel (100) is fixed to said image forming apparatus,
said second panel (200) is disposed opposite to said image forming apparatus with respect to said first panel (100),
a projection area of said second panel (200) to the plane parallel to said display surface is smaller than a projection area of said first panel (100),
each of said first and second panels (100, 200) includes a first group of keys (10, 20) disposed in a region that is exposed independent from relative positions of said first and second panels (100, 200), and
said first panel (100) includes a second group of keys (20) disposed in a region that is exposed only when said first and second panels (100, 200) do not overlap each other, wherein a mechanism that can relatively move said first and second panels is configured to vary in a plurality of steps an exposure amount of the region where said second group of keys of said first panel is disposed, wherein a direction in which said second panel (200) is moved to provide the exposed region is identical to a sheet discharge direction of said image forming apparatus, and wherein the operation panel device further comprises a fixing mechanism (410; 422; 440) for fixing a state in which said first and second panels (100, 200) do not overlap each other.

2. The operation panel device according to claim 1, wherein said first group of keys (10) is commonly used in a plurality of processes that can be performed by said image forming apparatus, and
said second group of keys (20) is used in processes of the number smaller than the number of processes performed with use of said first group of keys (10) in the plurality of processes that can be performed by said image forming apparatus.

3. The operation panel device according to claim 1 or 2, further comprising a display device (50) for providing said display surface, the display device (50) being mounted on said second panel (200).

4. The operation panel device according to claim 3, wherein said second group of keys (20) of said first panel (100) includes the keys (30a) used for inputting a numeric character.

5. The operation panel device according to any one of claims 1 to 4, wherein said first and second panels (100, 200) can relatively move in both a first direction and a second direction opposite to said first direction, and
said first panel (100) includes a first key of the second-key group (30-1) disposed in a region that is exposed when said second panel (200) relatively moves in said first direction, and a second key of the second-key group (30-2) disposed in a region that is exposed when said second panel (200) relatively moves in said first direction.

6. The operation panel device according to any one of claims 1 to 4, wherein said first panel (100) and said second panels (200) can relatively move in both a first direction and a second direction opposite to said first direction,
said second group of keys (200) of said first panel (100) is disposed in a region that is exposed when said first panel (100) relatively moves in said first direction and is also exposed when said first panel (100) relatively moves in said second direction.

7. The operation panel device according to any one of claims 1 to 6, wherein said second group of keys (20) of said first panel (100) further includes an interrupt key (30d) that is disposed close to the keys used for inputting a numeric character.

8. The operation panel device according to any one of claims 1 to 7, wherein said second group of keys (20) of said first panel (100) further includes a voice guide key (30b) that is disposed close to the keys used for inputting a numeric character,

9. The operation panel device according to any one of claims 1 to 8, wherein said second group of keys (20) of said first panel (100) further includes the keys (30e) used for inputting a character.

10. The operation panel device according to any of claims 3 to 9, wherein, in said second panel (200), said display device is disposed on a side identical to a moving direction of said second panel (200), and each key is disposed on a side opposite to the moving direction.

11. The operation panel device according to any of claims 1 to 10, wherein said first panel includes a movable unit in which said second group of keys (30) is disposed, and
said movable unit moves relatively in a second direction opposite to a first direction in said first panel (100) in response to relative movements of said first and second panels (100, 200) in said first direction.

12. The operation panel device according to any of claims 1 to 11, wherein a ridge line portion (210) of said second panel (200) is formed into a non-right angle shape, the ridge line portion (210) corresponding to the region that is exposed by the relative movements of said first and second panels (100, 200).

13. The operation panel device according to any of claims 1 to 12, wherein said operation panel device is disposed on a side opposite to a sheet discharge direction of said image forming apparatus and in a position where the operation panel device (1) does not project from a side surface of said image forming apparatus.

14. The operation panel device according to claim 1, wherein said fixing mechanism (410; 422; 440) includes a stopper (410) piercing said first and second panels (100, 200) from a side opposite to said display surface.

15. The operation panel device according to claim 14, wherein said fixing mechanism (422) further includes a mechanism (420) for forcing the stopper (410) in a rod shape.

16. An image forming apparatus (MFP) comprising the operation panel device (1) according to any of claims 1-15.

## Patentansprüche

1. Bedientafelvorrichtung (1), angebracht an einem Bilderzeugungsgerät (MFP), mit einer Anzeigefläche, wobei die Bedientafelvorrichtung (1) eine erste und zweite Tafel (100, 200) umfasst, die dazu ausgebildet sind, relativ entlang einer zu der Anzeigefläche parallelen Ebene bewegbar zu sein, wobei
die erste Tafel (100) an dem Bilderzeugungsgerät fixiert ist,
die zweite Tafel (200) bezüglich der ersten Tafel (100) dem Bilderzeugungsgerät gegenüberliegend angeordnet ist,
eine Projektionsfläche der zweiten Tafel (200) auf die zu der Anzeigefläche parallele Ebene kleiner ist, als eine Projektionsfläche der ersten Tafel (100),
jede der ersten und der zweiten Tafel (100, 200) eine erste Gruppe von Tasten (10, 20) umfasst, die in einer Zone angeordnet ist, die unabhängig von relativen Positionen der ersten und der zweiten Tafel (100, 200) freigelegt ist, und
die erste Tafel (100) eine zweite Gruppe von Tasten (20) umfasst, die in einer Zone angeordnet ist, die nur dann freigelegt ist, wenn die erste und die zweite Tafel (100, 200) einander nicht überlappen, wobei ein Mechanismus, der die erste und zweite Tafel relativ zueinander bewegen kann, dazu ausgebildet ist, einen Freilegungsbetrag der Zone, in der die zweite Gruppe von Tasten der ersten Tafel angeordnet ist, in einer Mehrzahl von Schritten zu variieren, wobei eine Richtung, in der die zweite Tafel (200) bewegt wird, um die freigelegte Zone bereitzustellen, identisch mit einer Blattausgaberichtung des Bilderzeugungsgeräts ist, und wobei die Bedientafelvorrichtung weiter einen Fixiermechanismus (410; 422; 440) zum Fixieren eines Zustands, in dem die erste und die zweite Tafel (100, 200) einander nicht überlappen, umfasst.

2. Bedientafelvorrichtung gemäß Anspruch 1, wobei die erste Gruppe von Tasten (10) allgemein in einer Mehrzahl von Prozessen, die durch das Bilderzeugungsgerät durchgeführt werden können, verwendet wird, und
die zweite Gruppe von Tasten (20) in Prozessen der Anzahl, die kleiner ist, als die Anzahl von Prozessen, die unter Verwendung der ersten Gruppe von Tasten (10) in der Mehrzahl von Prozessen, die durch das Bilderzeugungsgerät durchgeführt werden können, durchgeführt werden, verwendet wird.

3. Bedientafelvorrichtung gemäß Anspruch 1 oder 2, weiter umfassend eine Anzeigevorrichtung (50) zum Bereitstellen der Anzeigefläche, wobei die Anzeigevorrichtung (50) an der zweiten Tafel (200) angebracht ist.

4. Bedientafelvorrichtung gemäß Anspruch 3, wobei die zweite Gruppe von Tasten (20) der ersten Tafel (100) die Tasten (30a), die zum Eingeben eines numerischen Zeichens verwendet werden, umfasst.

5. Bedientafelvorrichtung gemäß einem der Ansprüche 1 bis 4, wobei sich die erste und die zweite Tafel (100, 200) in sowohl einer ersten Richtung als auch einer zu der ersten Richtung entgegengesetzten zweiten Richtung relativ bewegen können, und
die erste Tafel (100) eine erste Taste der Zweite-Taste-Gruppe (30-1), die in einer Zone angeordnet ist, die freigelegt wird, wenn sich die zweite Tafel (200) relativ in der ersten Richtung bewegt, und eine zweite Taste der Zweite-Taste-Gruppe (30-2), die in einer Zone angeordnet ist, die freigelegt wird, wenn sich die zweite Tafel (200) relativ in der ersten Richtung bewegt, umfasst.

6. Bedientafelvorrichtung gemäß einem der Ansprüche 1 bis 4, wobei sich die erste Tafel (100) und die zweite Tafel (200) in sowohl einer ersten Richtung als auch einer zu der ersten Richtung entgegengesetzten zweiten Richtung relativ bewegen können,
die zweite Gruppe von Tasten (200) der ersten Tafel (100) in einer Zone angeordnet ist, die freigelegt wird, wenn sich die erste Tafel (100) relativ in der ersten Richtung bewegt, und auch freigelegt wird, wenn sich die erste Tafel (100) relativ in der zweiten Richtung bewegt.

7. Bedientafelvorrichtung gemäß einem der Ansprüche 1 bis 6, wobei die zweite Gruppe von Tasten (20) der ersten Tafel (100) weiter eine Unterbrechungstaste (30d) umfasst, die nahe bei den zum Eingeben eines numerischen Zeichens verwendeten Tasten angeordnet ist.

8. Bedientafelvorrichtung gemäß einem der Ansprüche 1 bis 7, wobei die zweite Gruppe von Tasten (20) der ersten Tafel (100) weiter eine Sprachführungstaste (30b) umfasst, die nahe bei den zum Eingeben eines numerischen Zeichens verwendeten Tasten angeordnet ist.

9. Bedientafelvorrichtung gemäß einem der Ansprüche 1 bis 8, wobei die zweite Gruppe von Tasten (20) der ersten Tafel (100) weiter die zum Eingeben eines Zeichens verwendeten Tasten (30e) umfasst.

10. Bedientafelvorrichtung gemäß einem der Ansprüche 3 bis 9, wobei in der zweiten Tafel (200) die Anzeigevorrichtung an einer Seite angeordnet ist, die mit einer Bewegungsrichtung der zweiten Tafel (200) identisch ist, und jede Taste an einer zu der Bewegungsrichtung entgegengesetzten Seite angeordnet ist.

11. Bedientafelvorrichtung gemäß einem der Ansprüche 1 bis 10, wobei die erste Tafel eine bewegbare Einheit umfasst, in der die zweite Gruppe von Tasten (30) angeordnet ist, und
die bewegbare Einheit sich relativ in einer zu einer ersten Richtung entgegengesetzten zweiten Richtung in der ersten Tafel (100) bewegt, als Reaktion auf relative Bewegungen der ersten und der zweiten Tafel (100, 200) in der ersten Richtung.

12. Bedientafelvorrichtung gemäß einem der Ansprüche 1 bis 11, wobei ein Firstlinienabschnitt (210) der zweiten Tafel (200) in eine nicht-rechtwinklige Form geformt ist, wobei der Firstlinienabschnitt (210) der Zone entspricht, die durch die relativen Bewegungen der ersten und der zweiten Tafel (100, 200) freigelegt wird.

13. Bedientafelvorrichtung gemäß einem der Ansprüche 1 bis 12, wobei die Bedientafelvorrichtung an einer Seite angeordnet ist, die zu einer Blattausgaberichtung des Bilderzeugungsgeräts entgegengesetzt ist, und in einer Position, in der die Bedientafelvorrichtung (1) nicht von einer Seitenfläche des Bilderzeugungsgeräts vorspringt.

14. Bedientafelvorrichtung gemäß Anspruch 1, wobei der Fixiermechanismus (410; 422; 440) einen Stopper (410) umfasst, der die erste und die zweite Tafel (100, 200) von einer der Anzeigefläche gegenüberliegenden Seite her durchbohrt.

15. Bedientafelvorrichtung gemäß Anspruch 14, wobei der Fixiermechanismus (422) weiter einen Mechanismus (420) zum Forcieren des Stoppers (410) in eine Stangenform umfasst.

16. Bilderzeugungsgerät (MFP), umfassend die Bedientafelvorrichtung (1) gemäß einem der Ansprüche 1 bis 15.

## Revendications

1. Dispositif de panneau de commande (1), monté sur un appareil de formation d'image (MFP), avec une surface d'affichage, le dispositif de panneau de commande (1) comprenant des premier et second panneaux (100, 200) qui sont configurés pour être mobiles de manière relative le long d'un plan parallèle à ladite surface d'affichage, dans lequel
ledit premier panneau (100) est fixé audit appareil de formation d'image,
ledit second panneau (200) est disposé à l'opposé dudit appareil de formation d'image par rapport audit premier panneau (100),
une zone de saillie dudit second panneau (200) par rapport au plan parallèle à ladite surface d'affichage est plus petite qu'une zone de saillie dudit premier panneau (100),
chacun desdits premier et second panneaux (100, 200) inclut un premier groupe de touches (10, 20) disposé dans une région qui est exposée indépendamment de positions relatives desdits premier et second panneaux (100, 200), et
ledit premier panneau (100) inclut un second groupe de touches (20) disposé dans une région qui est exposée seulement lorsque lesdits premier et second panneaux (100, 200) ne se chevauchent pas, dans lequel un mécanisme qui peut déplacer de manière relative lesdits premier et second panneaux est configuré pour faire varier en une pluralité d'étapes une quantité d'exposition de la région où ledit second groupe de touches dudit premier panneau est disposé, dans lequel une direction dans laquelle ledit second panneau (200) est déplacé pour fournir la région exposée est identique à une direction de décharge de feuille dudit appareil de formation d'image, et dans lequel le dispositif de panneau de commande comprend en outre un mécanisme de fixation (410 ; 422 ; 440) pour fixer un état dans lequel lesdits premier et second panneaux (100, 200) ne se chevauchent pas.

2. Dispositif de panneau de commande selon la revendication 1, dans lequel ledit premier groupe de touches (10) est couramment utilisé dans une pluralité de processus qui peuvent être exécutés par ledit appareil de formation d'image, et
ledit second groupe de touches (20) est utilisé dans des processus du nombre inférieur au nombre de processus exécutés avec l'utilisation dudit premier groupe de touches (10) dans la pluralité de processus qui peuvent être exécutés par ledit appareil de formation d'image.

3. Dispositif de panneau de commande selon la revendication 1 ou 2, comprenant en outre un dispositif d'affichage (50) pour fournir ladite surface d'affichage, le dispositif d'affichage (50) étant monté sur ledit second panneau (200).

4. Dispositif de panneau de commande selon la revendication 3, dans lequel ledit second groupe de touches (20) dudit premier panneau (100) inclut les touches (30a) utilisées pour entrer un caractère numérique.

5. Dispositif de panneau de commande selon l'une quelconque des revendications 1 à 4, dans lequel lesdits premier et second panneaux (100, 200) peuvent se déplacer de manière relative à la fois dans une première direction et dans une seconde direction opposée à ladite première direction, et
ledit premier panneau (100) inclut une première touche du second groupe de touches (30-1) disposée dans une région qui est exposée lorsque ledit second panneau (200) se déplace de manière relative dans ladite première direction, et une seconde touche du second groupe de touches (30-2) disposée dans une région qui est exposée lorsque ledit second panneau (200) se déplace de manière relative dans ladite première direction.

6. Dispositif de panneau de commande selon l'une quelconque des revendications 1 à 4, dans lequel ledit premier panneau (100) et ledit second panneau (200) peuvent se déplacer de manière relative à la fois dans une première direction et dans une seconde direction opposée à ladite première direction,
ledit second groupe de touches (200) dudit premier panneau (100) est disposé dans une région qui est exposée lorsque ledit premier panneau (100) se déplace de manière relative dans ladite première direction et est également exposée lorsque ledit premier panneau (100) se déplace de manière relative dans ladite seconde direction.

7. Dispositif de panneau de commande selon l'une quelconque des revendications 1 à 6, dans lequel ledit second groupe de touches (20) dudit premier panneau (100) inclut en outre une touche d'interruption (30d) qui est disposée à proximité des touches utilisées pour entrer un caractère numérique.

8. Dispositif de panneau de commande selon l'une quelconque des revendications 1 à 7, dans lequel ledit second groupe de touches (20) dudit premier panneau (100) inclut en outre une touche de guidage vocal (30b) qui est disposée à proximité des touches utilisées pour entrer un caractère numérique.

9. Dispositif de panneau de commande selon l'une quelconque des revendications 1 à 8, dans lequel ledit second groupe de touches (20) dudit premier panneau (100) inclut en outre les touches (30e) utilisées pour entrer un caractère numérique.

10. Dispositif de panneau de commande selon l'une quelconque des revendications 3 à 9, dans lequel, dans ledit second panneau (200), ledit dispositif d'affichage est disposé sur un côté identique à une direction de déplacement dudit second panneau (200), et chaque touche est disposée sur un côté opposé à la direction de déplacement.

11. Dispositif de panneau de commande selon l'une quelconque des revendications 1 à 10, dans lequel ledit premier panneau inclut une unité mobile dans laquelle ledit second groupe de touches (30) est disposé, et
ladite unité mobile se déplace de manière relative dans une seconde direction opposée à une première direction dans ledit premier panneau (100) en réponse à des déplacements relatifs desdits premier et second panneaux (100, 200) dans ladite première direction.

12. Dispositif de panneau de commande selon l'une quelconque des revendications 1 à 11, dans lequel une partie de ligne de crête (210) dudit second panneau (200) est formée en une forme à angle non droit, la partie de ligne de crête (210) correspondant à la région qui est exposée par les déplacements relatifs desdits premier et second panneaux (100, 200).

13. Dispositif de panneau de commande selon l'une quelconque des revendications 1 à 12, dans lequel ledit dispositif de panneau de commande est disposé sur un côté opposé à une direction de décharge de feuille dudit appareil de formation d'image et dans une position où le dispositif de panneau de commande (1) ne fait pas saillie depuis une surface latérale dudit appareil de formation d'image.

14. Dispositif de panneau de commande selon la revendication 1, dans lequel ledit mécanisme de fixation (410 ; 422 ; 440) inclut une butée (410) perçant lesdits premier et second panneaux (100, 200) depuis un côté opposé à ladite surface d'affichage.

15. Dispositif de panneau de commande selon la revendication 14, dans lequel ledit mécanisme de fixation (422) inclut en outre un mécanisme (420) pour forcer la butée (410) en une forme de tige.

16. Appareil de formation d'image (MFP) comprenant le dispositif de panneau de commande (1) selon l'une quelconque des revendications 1-15.
